(19) Europäisches Patentamt
European Patent Office
Office européen des brevets

(11) **EP 4 495 629 A1**

(12) **EUROPEAN PATENT APPLICATION**
published in accordance with Art. 153(4) EPC

(43) Date of publication:
**22.01.2025 Bulletin 2025/04**

(21) Application number: **23770330.1**

(22) Date of filing: **24.02.2023**

(51) International Patent Classification (IPC):
*G01S 7/34* (2020.01)    *G01S 7/4912* (2020.01)
*G01S 7/497* (2006.01)    *G01C 3/06* (2006.01)

(52) Cooperative Patent Classification (CPC):
**G01S 7/4912; G01S 7/497; G01S 17/34;** G01C 3/06

(86) International application number:
**PCT/JP2023/006754**

(87) International publication number:
**WO 2023/176371 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 JP 2022040509
15.03.2022 JP 2022040510
15.03.2022 JP 2022040511**

(71) Applicant: **KOITO MANUFACTURING CO., LTD.
Minato-ku, Tokyo, 108-8711 (JP)**

(72) Inventors:
• **GOTOH Hitoshi
Shizuoka-shi, Shizuoka 424-8764 (JP)**
• **INABA Takuya
Shizuoka-shi, Shizuoka 424-8764 (JP)**
• **MAEDA Yusuke
Shizuoka-shi, Shizuoka 424-8764 (JP)**

(74) Representative: **Cabinet Beau de Loménie
158, rue de l'Université
75340 Paris Cedex 07 (FR)**

(54) **MEASUREMENT APPARATUS AND MEASUREMENT METHOD**

(57) A measurement apparatus 1 includes a generation device 10 that generates frequency-modulated light, an optical device 20 that irradiates the light to a target object 90 and causes reflected light from the target object and reference light to interfere with each other, a detection device 30 that detects an interference wave between the reflected light and the reference light and outputs a beat signal, and a signal processing device 40 that determines a distance to the target object based on a time variation of a beat frequency of the beat signal.

*FIG.2*

WHEN DISTANCE TO TARGET OBJECT IS SHORT

— MEASUREMENT VALUE
- - - REFLECTED LIGHT

FREQUENCY

$f_{B3}$
$f_{B2}$
$f_{B1}$

TIME

EP 4 495 629 A1

**Description**

TECHNICAL FIELD

The present disclosure relates to a measurement apparatus and a measurement method.

BACKGROUND ART

A measurement apparatus such as LiDAR (Light Detection and Ranging, Laser Imaging Detection and Ranging) is known which obtains distance information to a surrounding object by measuring light (for example, refer to Patent Literature 1). In a measurement apparatus of a frequency modulated continuous wave (FMCW) method, frequency-modulated irradiation light is irradiated to a target object, and a distance to the target object or a relative speed to the target object is measured based on a beat frequency of an interference wave generated as a result of causing reflected light from the target object and reference light to interfere with each other.

CITATION LIST

PATENT LITERATURE

Patent Literature 1: JP2020-502503A

SUMMARY OF INVENTION

TECHNICAL PROBLEM

In the measurement apparatus of the FMCW method, it is common to modulate light so that the frequency increases or decreases linearly over time by controlling DC current of a laser light source. However, due to a delay in response of the laser light source, the frequency of light actually output from the laser light source may not increase or decrease linearly over time.

In addition, in the measurement apparatus of the FMCW method, light is modulated so that a gradual increase period, during which the frequency increases, and a gradual decrease period, during which the frequency decreases, are repeated alternately, and the distance to the target object is calculated based on the beat frequency during the gradual increase period and the beat frequency during the gradual decrease period. However, when the relative speed of the target object increases, the distance to the target object may not be accurately calculated (which will be described below).

A first object of the present disclosure is to implement distance measurement by the FMCW method using a laser light source with a delay in response.

A second object of the present disclosure is to accurately calculate a distance to a target object.

SOLUTION TO PROBLEM

An aspect of the present disclosure for achieving the first object is a measurement apparatus including a generation device configured to generate frequency-modulated light; an optical device configured to irradiate the light to a target object and cause reflected light from the target object and reference light to interfere with each other; a detection device configured to detect an interference wave between the reflected light and the reference light and output a beat signal; and a signal processing device configured to determine a distance to the target object based on a time variation of a beat frequency of the beat signal.

An aspect of the present disclosure for achieving the first object is a measurement method including inputting a test current varying linearly over time to a light source; outputting test light frequency-modulated in response to the test current from the light source; dividing the test light into first test light and second test light, providing a predetermined time difference between the first test light and the second test light, and causing the first test light and the second test light to interfere with each other to generate test interference light; causing a detection device to detect the test interference light and output a test beat signal; determining a beat frequency for each time of the test beat signal; determining a time variation of a frequency of the test light based on the beat frequency for each time of the test beat signal; outputting a corrected current corrected based on the time variation of the frequency of the test light; outputting measurement light frequency-modulated in response to the corrected current from a light source; irradiating the measurement light to a target object and causing reflected light from the target object and the measurement light to interfere with each other to generate interference light; causing the detection device to detect the interference light and output a beat signal; and determining a distance to the target object based on the beat frequency of the beat signal.

An aspect of the present disclosure for achieving the second object is a measurement apparatus including a generation device configured to generate measurement light frequency-modulated so as to repeat a gradual increase period, during which a frequency increases, a gradual decrease period, during which a frequency decreases, and a constant period, during which a frequency is constant, in a predetermined order; an optical device configured to irradiate the measurement light to a target object and cause reflected light from the target object and the measurement light to interfere with each other; a detection device configured to detect an interference wave between the reflected light and the measurement light and output a beat signal; and a signal processing device configured to determine a distance to the target object based on a first frequency indicating a beat frequency of the beat signal in the gradual increase period, a second frequency indicating a beat frequency of the beat signal in the gradual decrease period, and a third frequency indicating a beat frequency of the beat signal in the constant period.

ADVANTAGEOUS EFFECTS OF INVENTION

According to the present disclosure, the distance can be measured by the FMCW method using a laser light source with a delay in response.

In addition, according to the present disclosure, the distance to the target object can be accurately calculated.

BRIEF DESCRIPTION OF DRAWINGS

FIG. 1 illustrates an overall configuration of a measurement apparatus 1.
FIG. 2 illustrates an outline of a time variation of frequencies of measurement light and reflected light.
FIG. 3 illustrates an outline of a time variation of frequencies of the measurement light and the reflected light.
FIG. 4 illustrates an outline of a time variation of a beat frequency.
FIG. 5 illustrates an outline of a time variation of the beat frequency.
FIG. 6 is a flowchart of processing that is executed by an analysis unit 42.
FIG. 7 illustrates a measurement method of a beat frequency.
FIG. 8 illustrates a first table stored in advance by the analysis unit 42.
FIG. 9 illustrates a second table stored in advance by the analysis unit 42.
FIG. 10 illustrates an outline of a time variation of a beat frequency $f_B$ when a target object 90 is moving.
FIG. 11 illustrates a time variation of a frequency of frequency-modulated light.
FIG. 12 illustrates a time variation of the frequency of the frequency-modulated light.
FIG. 13 illustrates a time variation of the frequency of the frequency-modulated light.
FIG. 14 illustrates a case where light is modulated so that a frequency increases or decreases linearly over time.
FIG. 15 illustrates the case where light is modulated so that the frequency increases or decreases linearly over time.
FIG. 16 is a graph showing time variations of frequencies of measurement light and reflected light when the target object 90 is moving.
FIG. 17 illustrates a case where a frequency increases or decreases non-linearly over time.
FIG. 18 illustrates the case where the frequency increases or decreases non-linearly over time.
FIG. 19 illustrates an overall configuration of a measurement apparatus 1001.
FIG. 20 illustrates a time variation of a frequency of frequency-modulated light.
FIG. 21 illustrates time variations of frequencies of measurement light and reflected light.
FIG. 22 is a flowchart of processing that is executed by an analysis unit 1042.
FIG. 23 illustrates various patterns of a magnitude relation between the measurement light and the reflected light.
FIG. 24 illustrates a frequency of calculation.
FIG. 25 illustrates a frequency of calculation.
FIG. 26 is a flowchart of a variation.
FIG. 27 illustrates frequencies of the measurement light and the reflected light in a variation.
FIG. 28 illustrates an effect of a high relative speed of a target object 1090.
FIG. 29 illustrates an overall configuration of a measurement apparatus 2001.
FIG. 30 is a reference illustration diagram showing a relation between an input current input to a laser light source 2013 and a frequency analysis result (FFT analysis result) of a beat signal when the input current is not corrected.
FIG. 31 illustrates an outline of a measurement method of the present case.
FIG. 32 illustrates a correction data obtaining apparatus 2001'.
FIG. 33 is a flowchart of a measurement method of the present embodiment.
FIG. 34 is a graph of a test current.
FIG. 35 is a graph showing a time variation of a beat frequency of a test beat signal.

FIG. 36 illustrates a method for determining a time variation of test light.
FIG. 37 illustrates a measurement method of a beat frequency.
FIG. 38 illustrates a relation between the test current and the frequency of the test light.
FIG. 39 illustrates a generation method of waveform data.
FIG. 40 illustrates the generation method of waveform data.
FIG. 41 illustrates a measurement apparatus 2001 of a variation.
FIG. 42 illustrates a delay in response of a laser light source 2013.
FIG. 43 illustrates a delay in response of the laser light source 2013.

Hereinafter, embodiments of the present disclosure will be described with reference to the drawings. Note that, in the following description, the same or similar configurations are denoted with the same reference signs, and redundant descriptions may be omitted.

< Overall Configuration>

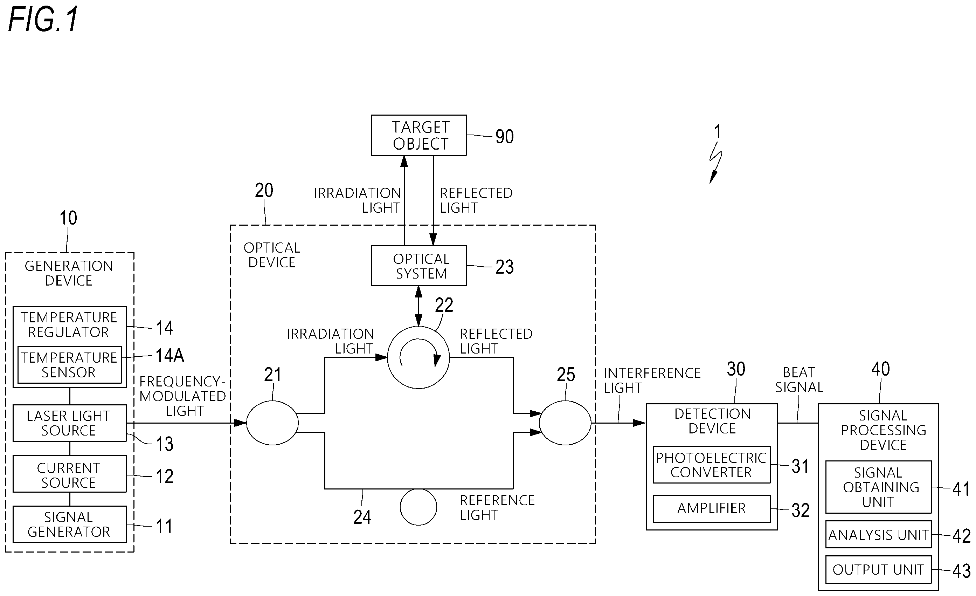

FIG. 1 illustrates an overall configuration of a measurement apparatus 1.
The measurement apparatus 1 is an apparatus for measuring a distance to a target object 90. The measurement apparatus 1 has a function as a so-called LiDAR. The measurement apparatus 1 measures a distance to the target object 90 by an FMCW method. That is, the measurement apparatus 1 irradiates frequency-modulated measurement light (irradiation light) to the target object 90, causes reflected light from the target object 90 and the measurement light (reference light) to interfere with each other, and measures a distance to the target object 90 based on a frequency (beat frequency) of a beat signal that is a detection result of interference light. Note that the measurement apparatus 1 can measure not only the distance to the target object 90 but also a relative speed to the target object 90.
The measurement apparatus 1 includes a generation device 10, an optical device 20, a detection device 30, and a signal processing device 40.
The generation device 10 is a device for generating light whose frequency is modulated (frequency-modulated light). The generation device 10 outputs the frequency-modulated light to the optical device 20. Part of the light (measurement light) output from the generation device 10 becomes irradiation light to be irradiated to the target object 90, and part thereof becomes reference light that is caused to interfere with the reflected light. The generation device 10 includes a signal generator 11, a current source 12, a laser light source 13, and a temperature regulator 14.
The signal generator 11 generates a voltage signal for controlling the current source 12. The signal generator 11 is, for example, a waveform generator, and generates, for example, a voltage signal of a triangular waveform and outputs the same to the current source 12.
The current source 12 generates a current signal for controlling a light source. The current source 12 generates a current signal corresponding to the voltage signal from the signal generator 11. For example, the current source 12 generates a current signal of a triangular waveform corresponding to the voltage signal of a triangular waveform and outputs the same to the laser light source 13.
The laser light source 13 emits light whose frequency is modulated (frequency-modulated light). For example, the laser light source 13 is configured using a distributed feedback (DFB) laser element. The laser light source 13 generates laser light with a frequency corresponding to the current signal from the current source 12. The laser light generates laser light frequency-modulated within a range of, for example, 193.4024 to 193.4266 THz ($\lambda$=1549.903 to 1550.097 nm). For example, the laser light source 13 generates laser light (frequency-modulated light) whose frequency is gradually increased or decreased in response to the current signal of a triangular waveform. The laser light source 13 outputs the laser light to the optical device 20.
The temperature regulator 14 regulates the laser light source 13 (especially, the laser element) to a predetermined temperature. The temperature regulator 14 has, for example, a temperature sensor 14A and a thermoelectric element (for example, a Peltier element), measures a temperature of the laser light source 13 by the temperature sensor 14A, and performs feedback control on the thermoelectric element based on a measurement result of the temperature sensor 14A, thereby regulating the laser light source 13 to a predetermined temperature.
The optical device 20 is a device that irradiates the frequency-modulated light (measurement light) to the target object 90 and causes the reflected light from the target object 90 and the reference light (measurement light) to interfere with each other. The optical device 20 uses part of the measurement light input from the generation device 10 as the irradiation light to be irradiated to the target object 90, uses part of the measurement light input from the generation device 10 as the reference light, and causes the reflected light from the target object 90 and the reference light to interfere with each other to generate interference light (interference wave). The optical device 20 outputs the interference light (interference wave) generated as a result of causing the reflected light and the reference light to interfere with each other to the detection device 30. The optical device 20 includes a divider 21, a circulator 22, an optical system 23, an optical waveguide 24, and a combiner 25.

The divider 21 divides the frequency-modulated light from the generation device 10. The divider 21 is configured by, for example, an optical coupler. One divided light is output to the circulator 22 and becomes the irradiation light to be irradiated to the target object 90. The other divided light is output to the optical waveguide 24 and becomes the reference light that is caused to interfere with the reflected wave.

The circulator 22 guides the light (irradiation light) from the divider 21 to the optical system 23 and guides the light (reflected light) from the optical system 23 to the combiner 25.

The optical system 23 irradiates the light toward the target object 90 and condenses and outputs the reflected light. The optical system 23 is configured by, for example, optical elements such as a lens, a mirror, and a prism. The optical system 23 includes, for example, a light projection optical system that irradiates the irradiation light toward the target object 90 and a light receiving optical system that condenses the reflected light. The optical system 23 may have a function of scanning the irradiation light. The optical system 23 outputs the condensed reflected light to the circulator 22. Note that the reflected light is input to the combiner 25 via the circulator 22.

The optical waveguide 24 constitutes an optical path of a predetermined length from the divider 21 to the combiner 25. The optical waveguide 24 guides the reference light from the divider 21 to the combiner 25 over a predetermined optical path length. The optical waveguide 24 is configured by, for example, an optical fiber.

The combiner 25 combines the reflected light from the circulator 22 and the reference light from the optical waveguide 24. The combiner 25 is configured by, for example, an optical coupler. The combiner 25 functions as an interferer that causes the reflected light and the reference light to interfere with each other, and generates interference light (interference wave) by the interference between the reflected light and the reference light. The combiner 25 outputs the interference light to the detection device 30.

The detection device 30 is a device that detects the interference light between the reflected light and the reference light and outputs a beat signal. The detection device 30 includes a photoelectric converter 31 and an amplifier 32.

The photoelectric converter 31 outputs an electric signal (current signal) in accordance with an intensity of the detected optical signal (here, interference light). The photoelectric converter 31 is, for example, a photo diode. The interference light detected by the photoelectric converter 31 is a wave whose amplitude changes periodically due to interference between the reflected light and reference light with different frequencies.

The amplifier 32 converts and outputs the current signal from the photoelectric converter 31 into a voltage signal. The amplifier 32 is configured by, for example, a transimpedance amplifier. The beat signal output from the amplifier 32 becomes a signal indicating a difference in frequency between the reflected light and the reference light. The beat frequency of the beat signal corresponds to a frequency of a beating component of the interference light. Additionally, the beat frequency of the beat signal corresponds to the difference in frequency between the reflected light and the reference light.

The signal processing device 40 is a device that determines the distance to the target object 90 based on the beat signal. The signal processing device 40 includes an A/D converter, an arithmetic device, a storage device, and the like, which are not shown. The arithmetic device is configured by, for example, an arithmetic processing device such as a CPU, a GPU, an MPU, or the like. The storage device is a device that is configured by a main storage device and an auxiliary storage device and stores programs and data. When the arithmetic device executes a program stored in the storage device, various processing for measuring the distance to the target object 90 is executed. In FIG. 1, various processing performed by the signal processing device 40 is shown as functional blocks.

The signal processing device 40 includes a signal obtaining unit 41, an analysis unit 42, and an output unit 43. The signal obtaining unit 41 receives the beat signal from the detection device 30 as a digital signal. The signal obtaining unit 41 is configured by, for example, an A/D converter (A/D conversion board, or the like). The analysis unit 42 determines the distance to the target object 90 based on the beat signal. The processing of the analysis unit 42 will be described below. The output unit 43 outputs an analysis result of the analysis unit 42 to the outside. For example, the output unit 43 outputs distance data indicating the distance to the target object 90 and speed data indicating the relative speed of the target object 90 to a vehicle ECU, which is an external device.

<Reference Description 1>

Before describing the processing of the analysis unit 42 in the present embodiment, a measurement method using the general FMCW method will first be described.

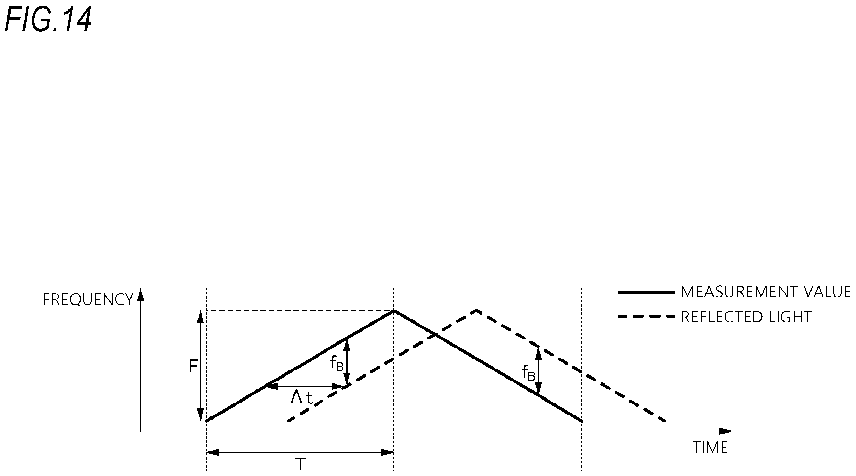

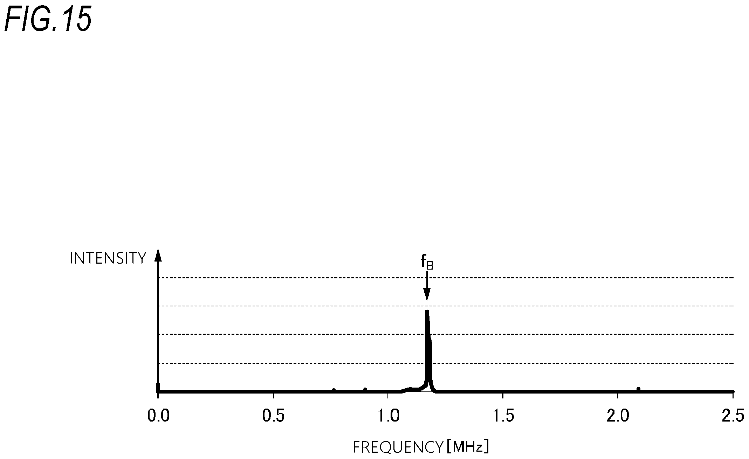

FIGS. 14 and 15 illustrate a case where light is modulated so that the frequency increases or decreases linearly over time. FIG. 14 is a graph showing time variations of frequencies of measurement light and reflected light, with the horizontal axis indicating time and the vertical axis indicating frequency. Note that a period during which the frequency increases is often referred to as a gradual increase period, and a period during which the frequency decreases is often referred to as a gradual decrease period. FIG. 15 is a graph showing a frequency analysis result of the beat signal (analysis result by fast Fourier transform (FFT)), with the horizontal axis indicating frequency and the vertical axis indicating amplitude (intensity). First, a case where the target object 90 is stationary (the relative speed to the target object 90 is zero) will be described.

$f_B$ in the drawing indicates a difference in frequency between measurement light (irradiation light, reference light) and reflected light. $\Delta t$ indicates a time it takes for light to travel back and forth to the target object 90. T indicates a gradual increase period or a gradual decrease period (modulation time for modulating the frequency). F indicates a modulation frequency width (frequency increase or decrease width).

Here, since the frequency increases linearly over time, the slope of the graph is constant, so $\Delta t$ becomes the following Formula (1).

$$\Delta t = (T/F) \cdot f_B \cdots (1)$$

Here, when the speed of light is denoted as c and the distance to the target object 90 is denoted as R, it takes time $\Delta t$ for the light to travel back and forth to the target object 90, so the distance R is given by the following Formula (2).

$$2R = c \cdot \Delta t$$

$$R = (c \cdot T/2F) \cdot f_B \cdots (2)$$

In Formula (2) above, frequency $f_B$ can be determined by performing FFT analysis on the beat signal as shown in FIG. 15. Additionally, the speed of light c, the modulation time T, and the modulation frequency width F are known. For this reason, by performing FFT analysis on the beat signal to determine the frequency $f_B$, the distance R to the target object 90 can be calculated.

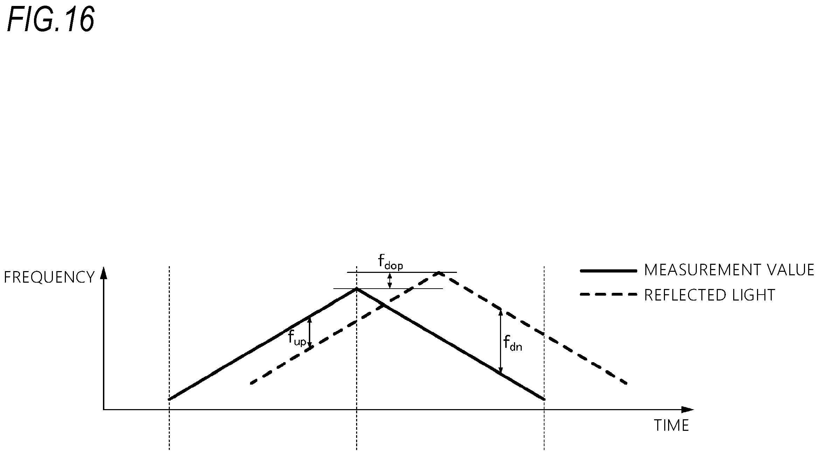

FIG. 16 is a graph showing time variations of the frequencies of the measurement light and the reflected light when the target object 90 is moving. Note that light is modulated so that the frequency increases or decreases linearly over time. As shown in the graph of the reflected light, when the target object 90 is moving, the frequency shifts due to the Doppler effect.

$f_{dop}$ in the drawing indicates a shift amount of frequency (Doppler shift frequency) due to the Doppler effect. $f_{up}$ indicates a difference in frequency between the measurement light (irradiation light, reference light) and the reflected light during the gradual increase period. $f_{dn}$ indicates a difference in frequency between the measurement light (irradiation light, reference light) and the reflected light during the gradual decrease period.

Frequency $f_{up}$ can be determined by performing FFT analysis on the beat signal during the gradual increase period. In addition, frequency $f_{dn}$ can be determined by performing FFT analysis on the beat signal during the gradual decrease period. Note that the frequency analysis of the beat signal is performed separately for each of the gradual increase period and gradual decrease period. The frequency $f_B$ can be determined based on frequency $f_{up}$ and frequency $f_{dn}$ as shown in the following Formula (3), and the distance R can be determined based on Formula (2) described above.

$$f_B = (f_{up} + f_{dn})/2 \cdots (3)$$

In addition, the Doppler shift frequency $f_{dop}$ can be determined based on frequency $f_{up}$ and frequency $f_{dn}$ as shown in the following Formula (4), and the relative speed V can be determined based on the following Formula (5).

$$f_{dop} = (f_{up} - f_{dn})/2 \cdots (4)$$

$$V = (\lambda/2) \cdot f_{dop} \cdots (5)$$

($\lambda$ is the wavelength of light)

<Reference Description 2: Delay In Response of Light Source>

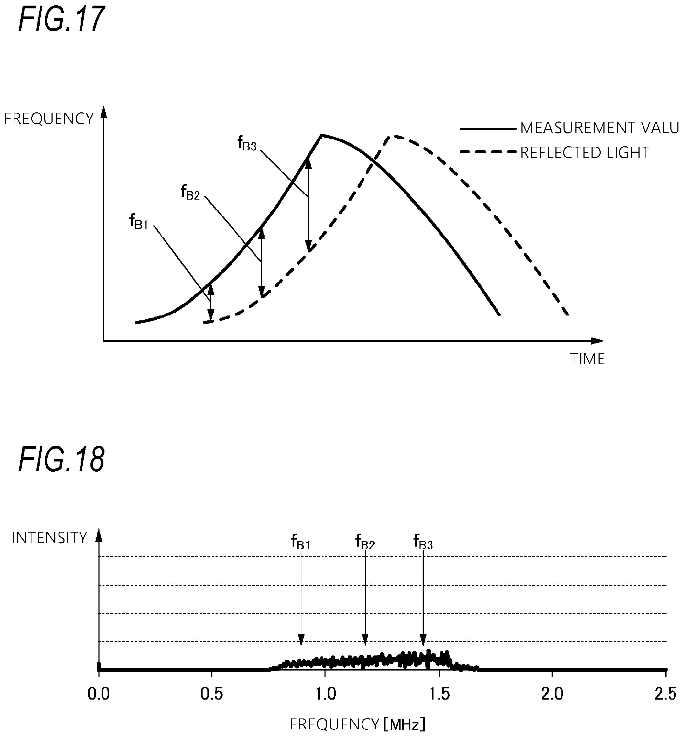

FIGS. 17 and 18 illustrates a case where a frequency increases or decreases non-linearly over time. FIG. 17 is a graph showing time variations of frequencies of measurement light (irradiation light, reference light) and reflected light, with the horizontal axis indicating time and the vertical axis indicating frequency. FIG. 18 is a graph showing a frequency analysis result (FFT analysis result) of the beat signal, with the horizontal axis indicating frequency and the vertical axis indicating amplitude (intensity). Here, for simple description, the target object 90 is assumed to be stationary (the relative speed to the target object 90 is assumed to be zero).

In the actual laser light source 13, there is a delay in response after the input current varies until the frequency of the output laser light varies. As a result, even when the current source 12 inputs a current signal of a triangular waveform to the laser light source 13, the frequency of the laser light output from the laser light source 13 does not increase or decrease linearly over time.

When the frequency varies non-linearly as such, the difference in frequency between the measurement light (irradiation light, reference light) and the reflected light does not remain constant. As a result, as shown in FIG. 18, even when frequency analysis (FFT analysis) is performed on the beat signal, it becomes difficult for a peak in intensity to appear at a specific frequency (in contrast, when the frequency varies linearly, a peak appears at a specific frequency as shown in FIG. 15). For this reason, when the frequency varies non-linearly, it is difficult to determine the beat frequency $f_B$ by frequency analysis on the beat signal, resulting in making it difficult to determine the distance R based on Formula (2) described above.

<Processing of Analysis Unit 42>

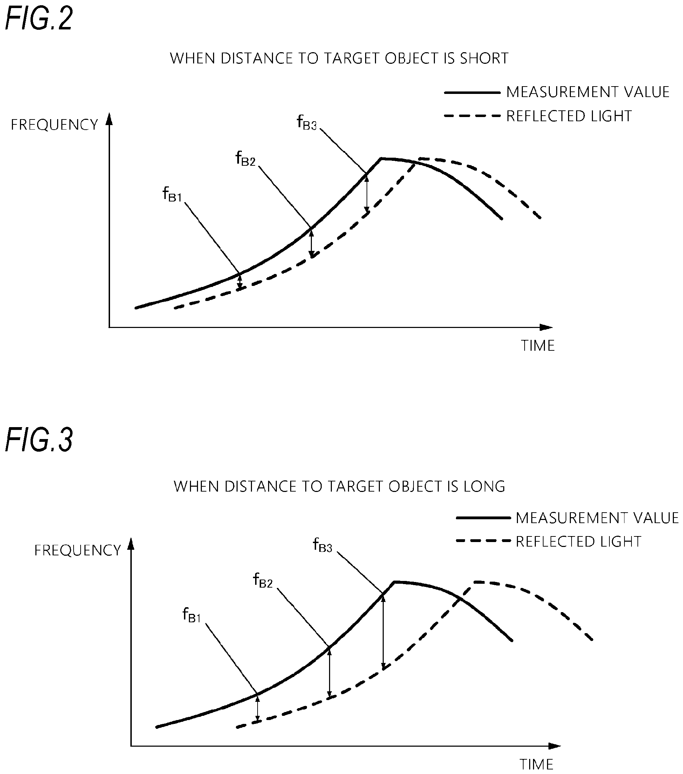

FIGS. 2 and 3 illustrate time variations of frequencies of measurement light (irradiation light, reference light) and reflected light. FIG. 2 illustrates a case where the distance to the target object 90 is short. FIG. 3 illustrates a case where the distance to the target object 90 is long. The horizontal axis of each drawing indicates time, and the vertical axis indicates frequency.

As shown in FIGS. 2 and 3, the difference in frequency between the measurement light (irradiation light, reference light) and the reflected light during the gradual increase period gradually increases ($f_{B1}<f_{B2}<f_{B3}$) due to an effect of the delay in response of the laser light source 13. When the distance to the target object 90 is short, as shown in FIG. 2, the time variation of the difference in frequency between the measurement light and the reflected light becomes relatively small. On the other hand, when the distance to the target object 90 is long, as shown in FIG. 3, the time variation of the difference in frequency between the measurement light and the reflected light becomes relatively large.

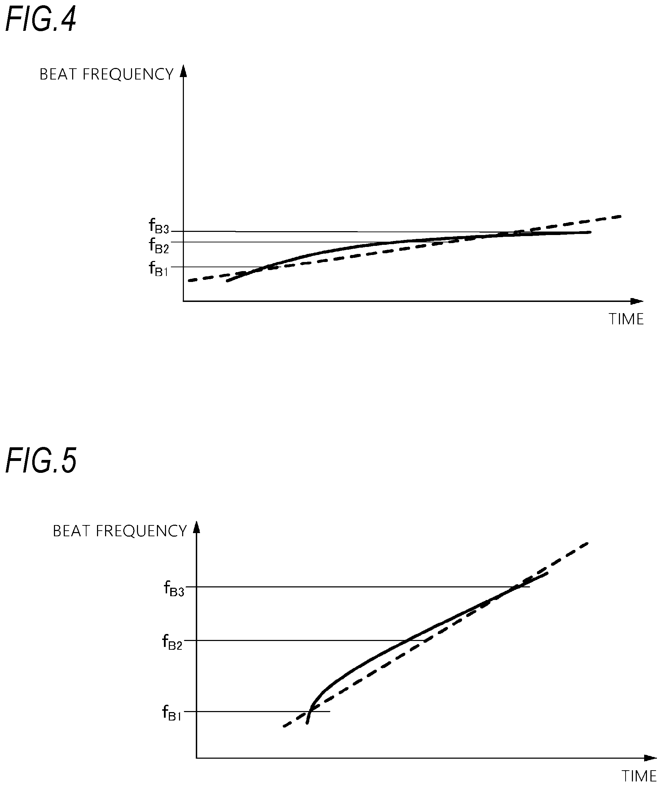

FIGS. 4 and 5 illustrate an outline of a time variation of a beat frequency. FIG. 4 illustrates a case where the distance to the target object 90 is short. FIG. 5 illustrates a case where the distance to the target object 90 is long. The horizontal axis of each drawing indicates time, and the vertical axis indicates beat frequency. The dotted line in the drawings corresponds to a linear approximation graph of a solid line graph.

As shown in FIGS. 4 and 5, due to the effect of the delay in response of the laser light source 13, the beat frequency of the beat signal varies over time (in contrast, as shown in FIG. 14, when the frequency increases or decreases linearly, the beat frequency is constant and does not vary over time during the gradual increase period or gradual decrease period). When the distance to the target object 90 is short, as shown in FIG. 4, the time variation of the beat frequency becomes relatively small. For example, when the distance to the target object 90 is short, as shown in FIG. 4, a ratio of an amount of change in the beat frequency to an amount of change in time (corresponding to the slope of the graph) becomes relatively small. On the other hand, when the distance to the target object 90 is long, as shown in FIG. 5, the time variation of the difference in frequency between the measurement light (irradiation light, reference light) and the reflected light, in other words, the time variation of the beat frequency become relatively large. For example, when the distance to the target object 90 is long, as shown in FIG. 5, the ratio of the amount of change in the beat frequency to the amount of change in time becomes relatively large.

Therefore, the analysis unit 42 determines the time variation of the beat frequency and determines the distance to the target object 90 based on the time variation of the beat frequency. Specifically, the analysis unit 42 determines the distance to the target object 90 based on a ratio of an amount of change in the beat frequency to an amount of change in time (a time rate of change of the beat frequency; equivalent to the slope of the graph).

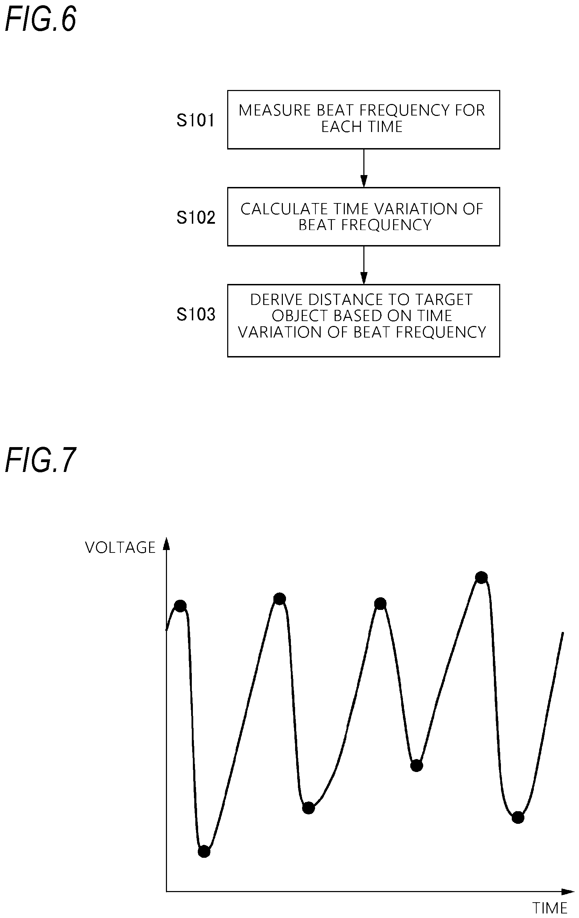

FIG. 6 is a flowchart of processing that is executed by the analysis unit 42. Each processing in the drawing is implemented by the arithmetic processing device constituting the signal processing unit 40 executing an analysis program.

The analysis unit 42 first measures the beat frequency for each time (S101). FIG. 7 illustrates a measurement method of a beat frequency. The graph in the drawing indicates a beat signal, with the horizontal axis indicating time and the vertical axis indicating voltage.

The analysis unit 42 first determines a time (peak time) at which the beat signal peaks. The black round mark on the graph in the drawing indicates a peak (local extremum; local maximum value or local minimum value) of the beat signal. For example, the analysis unit 42 sequentially measures a time at which the sign of the slope (differential value of the beat signal) of the voltage of the beat signal changes, as the peak time. Here, the analysis unit 42 measures a peak time at which the beat signal becomes a local maximum value (a time at which the sign of the slope of the voltage changes from positive to negative) and a peak time at which the beat signal becomes a local minimum value (a time at which the sign of the slope of the voltage changes from negative to positive), respectively. However, the analysis unit 42 may measure only the peak time of the local maximum value of the beat signal, or may measure only the peak time of the local minimum value of the beat signal. Note that, instead of measuring each peak time of all peaks of the beat signal, the analysis unit 42 may detect the peak time, for example, every predetermined cycle or every elapse of a predetermined time. The analysis unit 42 measures a plurality of peak times during the gradual increase period or the gradual decrease period.

Next, the analysis unit 42 calculates a beat frequency based on an interval between two peak times. For example, the analysis unit 42 calculates, based on an interval (time of one cycle of the beat signal) between a peak time of a certain local maximum value of the beat signal and a peak time of a next local maximum value, a beat frequency at that time (timing). Note that the analysis unit 42 may calculate, based on an interval (time of one cycle of the beat signal) between a peak time of a certain local minimum value of the beat signal and a peak time of a next local minimum value, a beat frequency at that time. In addition, the analysis unit 42 may calculate, based on an interval (time of a half cycle of the beat signal) between a peak time of a certain local maximum value (or local minimum value) of the beat signal and a peak time of a next local minimum value (or local maximum value), a beat frequency at that time. Alternatively, the analysis unit 42 may calculate, based on an interval between a peak time of a certain local maximum value (or local minimum value) of the beat signal and a peak time of a local maximum value (or local minimum value) after a plurality of cycles, a beat frequency at that time. The analysis unit 42 measures the beat frequency at each of a plurality of times (multiple timings) during the gradual increase period or the gradual decrease period.

Note that, in the example shown in FIG. 7, the analysis unit 42 alternately repeats the calculation of the beat frequency based on the peak times of two local maximum values and the calculation of the beat frequency based on the peak times of two local minimum values every half cycle. This makes it possible to determine the beat frequency every half cycle of the beat signal, determining the beat frequency with high temporal resolution.

Then, the analysis unit 42 determines a time variation of a beat frequency (S102). Here, the analysis unit 42 determines a ratio of an amount of change in the beat frequency to an amount of change in time (a time rate of change of the beat frequency), as an indicator indicating the time variation of the beat frequency. In other words, the analysis unit 42 calculates the slope of the graph (straight line) shown in FIG. 4 or 5. Specifically, the analysis unit 42 determines a linear approximation equation ($f_B = A \cdot t + B$) by the least squares method based on the beat frequency $f_B$ at each of a plurality of times t determined in S101, and sets the slope A of this approximation equation as a value indicating the time variation of the beat frequency (As described below, the analysis unit 42 may calculate the relative speed of the target object 90 based on the intercept B of this approximation equation.) Note that the method for calculating the ratio of the amount of change in the beat frequency to the amount of change in time (time rate of change of beat frequency) is not limited to the least squares method, and other calculation methods may also be used. For example, the analysis unit 42 may calculate a ratio of an increase in beat frequency to an increase in time based on the beat frequency of each of two times immediately after the start of the gradual increase period (or gradual decrease period) and immediately before the end of the gradual increase period (or gradual decrease period) (i.e. , a slope of a line connecting two points may be set as the time rate of change of the beat frequency).

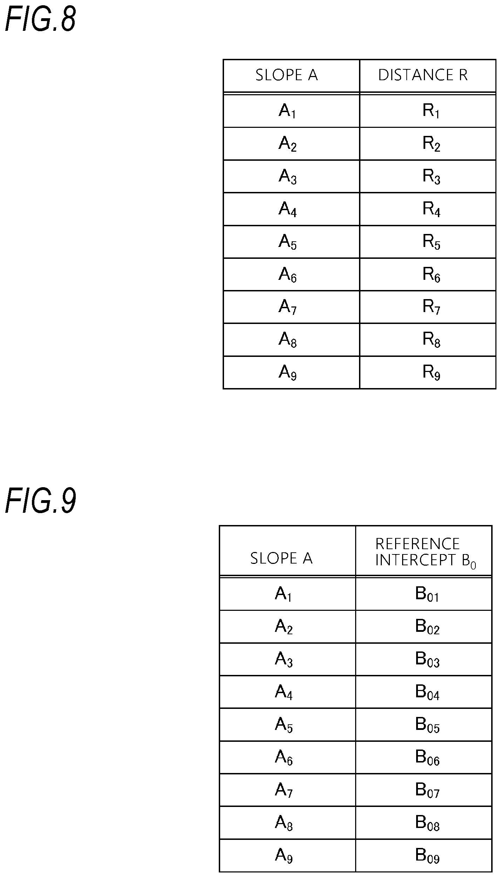

Then, the analysis unit 42 derives a distance to the target object 90 based on the time variation of the beat frequency (here, the ratio of the amount of change in the beat frequency to the amount of change in time; the time rate of change of the beat frequency) (S103). FIG. 8 illustrates a first table stored in advance by the analysis unit 42. In the first table, the slope A, which indicates the time variation of the beat frequency, and the distance R are associated with each other. The analysis unit 42 determines the distance R by referring to the first table based on the time variation of the beat frequency (slope A) determined in S102. For example, when the slope indicating the time variation of the beat frequency is $A_4$, the analysis unit 42 derives the distance to the target object 90 as $R_4$ by referring to the first table. Note that when the slope A determined in S102 is a value between the slope $A_i$ and the slope $A_{i+1}$ in the first table, the analysis unit 42 may interpolate the distance R equivalent to the slope A determined in S102, based on a distance $R_i$ corresponding to the slope $A_i$ and a distance $R_{i+1}$ corresponding to the slope $A_{i+1}$.

The analysis unit 42 may derive the relative speed to the target object 90 based on the time variation of the beat frequency or the magnitude of the beat frequency. Below, a method of deriving the relative speed will be described.

FIG. 9 illustrates a second table stored in advance by the analysis unit 42. In the second table, the slope A, which indicates the time variation of the beat frequency, and the reference intercept $B_0$ are associated with each other.

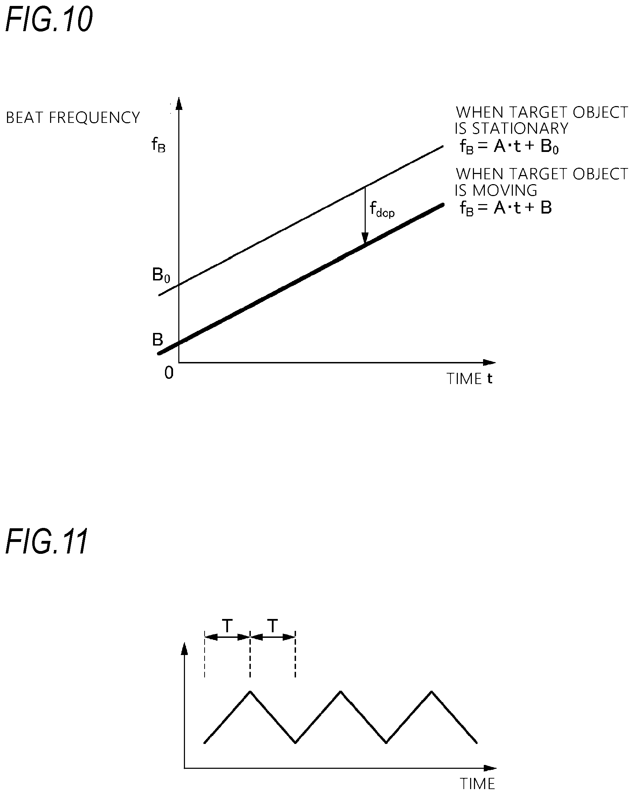

FIG. 10 illustrates an outline of the time variation of the beat frequency $f_B$ when the target object 90 is moving. As described above, when the target object 90 is moving, the frequency shifts due to the Doppler effect. $f_{dop}$ in the drawing indicates a shift amount of frequency (Doppler shift frequency) due to the Doppler effect. In the drawing, a relation between the reference intercept $B_0$ and the Doppler shift frequency $f_{dop}$ is illustrated.

As described above, the analysis unit 42 determines the linear approximation equation ($f_B = A \cdot t + B$) by the least squares method based on the beat frequency $f_B$ at each of a plurality of times t determined in S101, determines the slope A indicating the time variation of the beat frequency, and determines the intercept B. The intercept B serves as an indicator indicating the magnitude of the plurality of beat frequencies determined in S101.

Then, the analysis unit 42 determines a reference intercept $B_0$ by referring to the second table based on the time variation of the beat frequency (slope A) determined in S102. The reference intercept $B_0$ of the second table shown in FIG. 9 corresponds to a value of an intercept when the slope becomes a specific value A in a state in which the target object 90 is stationary (refer to FIG. 10). The reference intercept $B_0$ serves as an indicator indicating the magnitude of the beat frequency in a state in which the target object 90 is stationary.

Then, the analysis unit 42 determines a difference between the intercept B and the reference intercept $B_0$. As shown in FIG. 10, the difference between the intercept B and the reference intercept $B_0$ corresponds to the Doppler shift frequency $f_{dop}$. For example, when the slope indicating the time variation of the beat frequency is $A_4$, the analysis unit 42 calculates the Doppler shift frequency $f_{dop}$ by calculating the difference between the intercept B and the reference intercept $B_{04}$. The analysis unit 42 may determine the relative speed V $(=(\lambda/2) \cdot f_{dop})$ in accordance with Formula (5) described above, based on the Doppler shift frequency $f_{dop}$.

FIGS. 11 to 13 illustrate time variations of the frequency of the frequency-modulated light. The horizontal axis in the drawings indicates time, and the vertical axis indicates frequency.

FIG. 11 shows an aspect in which a gradual increase period, during which the frequency gradually increases, and a gradual decrease period, during which the frequency gradually decreases, are alternately repeated. When the signal generator 11 of the generation device 10 outputs a voltage signal of a triangular waveform, the laser light source 13 outputs a light whose frequency varies over time (frequency-modulated light) as shown in FIG. 11. As shown in FIG. 11, when frequency-modulating light (when the frequency of the frequency-modulated light varies over time so that the gradual increase period and the gradual decrease period are alternately repeated), the analysis unit 42 preferably has a first table (and the second table) for the gradual increase period and a first table (and a second table) for the gradual decrease period, respectively. With this, the distance to the target object 90 (and the relative speed to the target object 90) can be determined in each of the gradual increase period and the gradual decrease period.

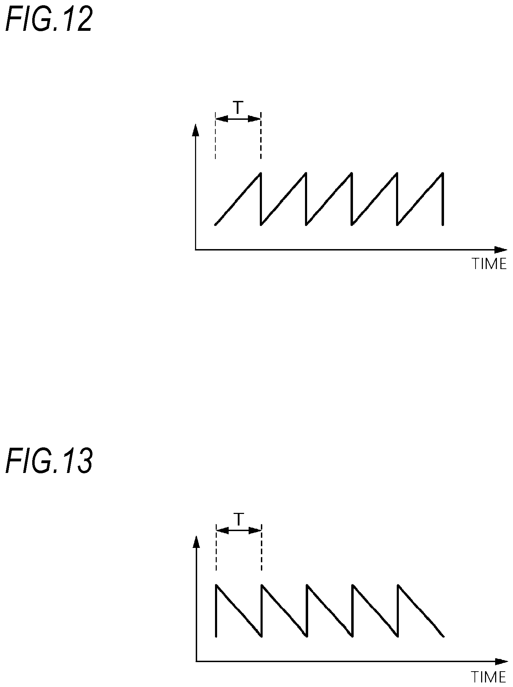

FIG. 12 shows that an aspect in which the frequency gradually increases and then suddenly drops repeats. FIG. 13 shows that an aspect in which the frequency gradually decreases and then suddenly rises repeats. When the signal generator 11 of the generation device 10 outputs a voltage signal of a sawtooth waveform, the laser light source 13 outputs frequency-modulated light whose frequency varies over time as shown in FIG. 12 or FIG. 13. When frequency-modulating light as shown in FIGS. 12 and 13, the analysis unit 42 only needs to be provided with one type of first table (and second table). With this, the analysis unit 42 does not need to have first table (and second table) for the gradual increase period or the gradual decrease period, so the amount of data in the table can be reduced.

Since the characteristics of the laser light source 13 (especially the laser element) vary with temperature, the delay in response of the laser light source 13 also varies with temperature. For this reason, the time variation of the frequency of the laser light output from the laser light source 13 depends on temperatures. As a result, even if the distance to the target object 90 is the same, when the temperature changes, the time variation of the beat frequency (slope A) determined in S102 changes.

Therefore, it is preferable that the analysis unit 42 has the first table in which the temperature, the time variation of the beat frequency (slope A), and the distance R are associated with one another. In other words, it is preferable that the temperature is also associated with the first table in which the time variation of the beat frequency (slope A) and the distance R are associated with each other. In this case, the analysis unit 42 determines the distance R by detecting the temperature by a temperature sensor and referring to the first table based on the temperature detected by the temperature sensor and the time variation of the beat frequency (slope A) determined in S102. This makes it possible to increase measurement accuracy of the distance.

Note that, in the above description, the analysis unit 42 stores in advance the first table in which the time variation of the beat frequency (slope A) and the distance R are associated with each other, and determines the distance R by referring to the first table using the time variation of the beat frequency (slope A) determined in S102 as a key. However, the analysis unit 42 may determine the distance R without using the table. For example, the analysis unit 42 may have a function that converts the time variation of the beat frequency (slope A) into the distance R, and use this function to convert the time variation of the beat frequency (slope A) obtained in S102 into the distance R, thereby determining the distance to the target object 90. Even with this, the analysis unit 42 can determine the distance to the target object 90 based on the time variation of the beat frequency of the beat signal.

Similarly, the distance R may be determined based on the temperature detected by the temperature sensor and the time variation of the beat frequency (slope A), without using the table. For example, the analysis unit 42 may use a function to calculate the distance R based on the temperature detected by the temperature sensor and the time variation of the beat frequency (slope A) determined in S102. Even with this, the analysis unit 42 can increase the measurement accuracy of the distance.

When determining the distance to the target object 90 by using the temperature detected by the temperature sensor, it is preferable that the temperature sensor detects the temperature of the laser light source 13 (especially, the laser element) of the generation device 10. This makes it possible to determine the distance to the target object 90 in response to the temperature characteristics of the laser light source 13, increasing the measurement accuracy of the distance. In this case, the analysis unit 42 may use the temperature detected by the temperature sensor 14A provided in a temperature regulating device. This allows the temperature sensor 14A to be used concurrently. However, the analysis unit 42 may determine the distance to the target object 90 using a temperature detected by a temperature sensor different from the temperature sensor 14A of the temperature regulating device.

=== Sub-conclusion ===

The measurement apparatus 1 includes the generation device 10, the optical device 20, the detection device 30, and the signal processing device 40. As shown in FIG. 17, when a laser light source with a delay in response is used, the frequency increases or decreases non-linearly over time. In this case, as shown in FIGS. 4 and 5, the beat frequency of the beat signal varies over time. Additionally, as shown in FIGS. 4 and 5, the time variation of the beat frequency depends on the distance to the target object. Therefore, the signal processing device 40 of the present embodiment determines the distance to the target object 90 based on the time variation of the beat frequency of the beat signal. This makes it possible to measure the distance by the FMCW method using a laser light source with a delay in response. Additionally, since an inexpensive laser light source can be used, the cost of the measurement apparatus 1 can be reduced.

The signal processing device 40 determines the beat frequency at each of a plurality of times (multiple timings) during the gradual increase period or gradual decrease period (refer to S101 in FIG. 6), and determines the time variation of the beat frequency based on the determined plurality of beat frequencies (S102). For example, as shown in FIGS. 4 and 5, the signal processing device 40 determines beat frequencies $f_{B1}$, $f_{B2}$, and $f_{B3}$ corresponding to each of three times during a certain gradual increase period, and determines a ratio of an amount of change in the beat frequency to an amount of change in time (corresponding to the time variation of the beat frequency; corresponding to the slope of the graph shown in FIGS. 4 and 5) based on the determined three beat frequencies $f_{B1}$, $f_{B2}$, and $f_{B3}$. This makes it possible to measure the distance to the target object based on the time variation of the beat frequency, in the processing of S103. Note that, instead of determining a plurality of beat frequencies during the gradual increase period, the signal processing device 40 may determine a plurality of beat frequencies during the gradual decrease period, and determine the time variation of the beat frequency (e.g., the slope of the graph) based on the plurality of determined beat frequencies.

As shown in FIG. 7, the signal processing device 40 determines the peak time at which the beat signal peaks, and determines the beat frequency based on the interval of the peak times. This makes it possible to determine the time variation of the beat frequency during the gradual increase period or the gradual decrease period. Note that the measurement method of the beat frequency is not limited thereto. For example, the signal processing device 40 may determine a time at which the beat signal becomes a predetermined voltage (e.g., 0 V) and obtain the beat frequency based on an interval of the times at which the beat signal becomes a predetermined voltage (e.g., a center voltage (average voltage) of the beat signal).

As shown in FIG. 7, the signal processing device 40 determines a peak time at which the beat signal becomes a local maximum value and a peak time at which the beat signal becomes a local minimum value, respectively, and determines the beat frequency every half cycle of the beat signal based on an interval of the peak times. This makes it possible to determine the beat frequency with high temporal resolution. However, the timing for determining the beat frequency is not limited thereto. For example, the signal processing device 40 may determine the peak time or beat frequency every predetermined cycle or every elapse of a predetermined time. Note that when the peak time or beat frequency is determined every predetermined cycle or every elapse of a predetermined time, the computational load of the signal processing device 40 can be reduced compared to when the beat frequency is determined every half cycle of the beat signal.

The signal processing device 40 determines the beat frequency at each of a plurality of times during the gradual increase period or gradual decrease period (refer to S101 in FIG. 6), and determines the relative speed of the target object based on the magnitude of the plurality of determined beat frequencies (refer to FIGS. 9 and 10). For example, as shown in FIG. 10, the signal processing device 40 determines the linear approximation equation ($f_B = A \cdot t + B$) by the least squares method based on the beat frequency at each of a plurality of times during a certain gradual increase period, determines the slope A indicating the time variation of the beat frequency, and determines the intercept B, which is an indicator indicating the magnitude of the plurality of beat frequencies. Then, the signal processing device 40 determines the Doppler shift frequency $f_{dop}$ from the difference between the intercept B and the reference intercept $B_0$ by referring to the second table shown in FIG. 9, and can determine the relative speed of the target object V ($=(\lambda/2) \cdot f_{dop}$) by the Doppler shift frequency. Note that, instead of determining the intercept B of the linear approximation equation by the least squares method, the signal processing device 40 may determine the relative speed of the target object by determining the Doppler shift frequency $f_{dop}$ based on another indicator indicating the magnitude of the beat frequency.

The signal processing device 40 stores in advance the table in which the time variation of the beat frequency is associated with the distance (refer to FIG. 8), and determines the distance by referring to the table. This makes it possible to determine the distance based on the time variation of the beat frequency. However, the signal processing device 40 may determine the distance without using the table.

When determining the distance by referring to the table, it is preferable that the temperature is further associated in the table in which the time variation of the beat frequency and the distance are associated with each other. Preferably, the signal processing device 40 determines the distance by referring to the table based on the temperature detected by the temperature sensor and the time variation of the beat frequency. This makes it possible to increase measurement accuracy of the distance.

Note that it is preferable to determine the distance by using the function based on the temperature detected by the temperature sensor and the time variation of the beat frequency, without using the table. This makes it possible to increase measurement accuracy of the distance.

When determining the distance to the target object 90 using the temperature detected by the temperature sensor, it is preferable that the temperature sensor detects the temperature of the generation device 10 (laser light source 13). This makes it possible to determine the distance to the target object 90 in response to the temperature characteristics of the laser light source 13, increasing the measurement accuracy of the distance.

According to the above measurement method, (1) frequency-modulated light is generated, (2) light is irradiated to the target object 90 and the reflected light from the target object 90 is caused to interfere with the reference light, (3) an interference wave between the reflected light and the reference light is detected by the detection device 30 and a beat signal is output from the detection device 30, and (4) the distance to the target object 90 is determined based on the time variation of the beat frequency of the beat signal. This makes it possible to measure the distance by the FMCW method using a laser light source with a delay in response.

<Overall Configuration>

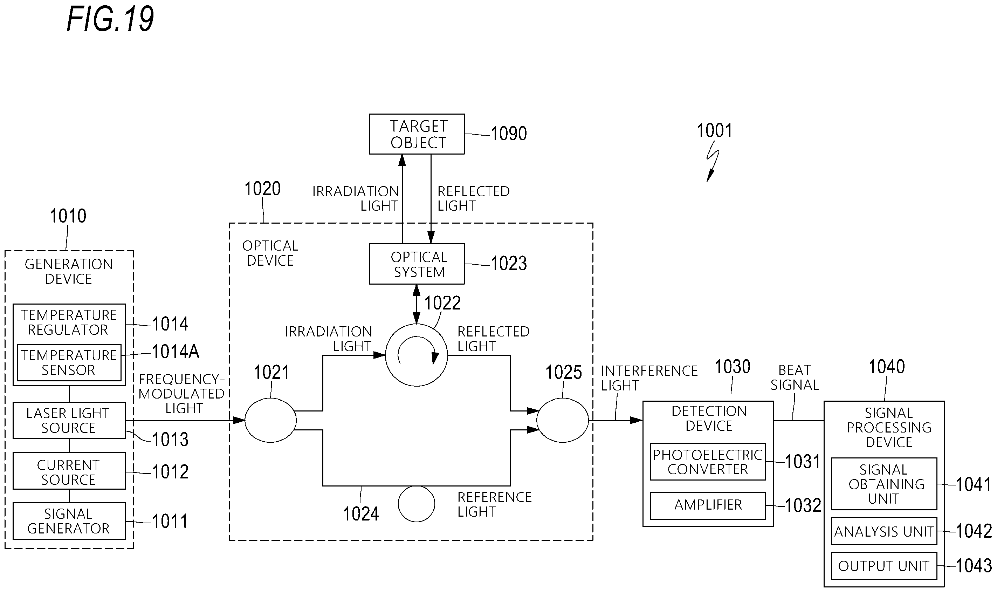

FIG. 19 illustrates an overall configuration of a measurement apparatus 1001.

The measurement apparatus 1001 is an apparatus for measuring a distance to a target object 1090. The measurement apparatus 1001 has a function as a so-called LiDAR. The measurement apparatus 1001 measures the distance to the target object 1090 using the FMCW method. That is, the measurement apparatus 1001 irradiates frequency-modulated measurement light (irradiation light) to the target object 1090, causes reflected light from the target object 1090 and the measurement light (reference light) to interfere with each other, and measures a distance to the target object 1090 based on a frequency (beat frequency) of a beat signal that is a detection result of interference light. Note that the measurement apparatus 1001 can measure not only the distance to the target object 1090 but also a relative speed to the target object 1090.

The measurement apparatus 1001 includes a generation device 1010, an optical device 1020, a detection device 1030, and a signal processing device 1040.

The generation device 1010 is a device for generating a light whose frequency is modulated (frequency-modulated light). The generation device 1010 outputs the frequency-modulated light to the optical device 1020. Part of the light (measurement light) output from the generation device 1010 becomes irradiation light to be irradiated to the target object 1090, and part thereof becomes reference light that is caused to interfere with the reflected light. The generation device 1010 includes a signal generator 1011, a current source 1012, a laser light source 1013, and a temperature regulator 1014.

The signal generator 1011 generates a voltage signal for controlling the current source 1012. The signal generator 1011 is, for example, a waveform generator, and generates, for example, a voltage signal of a triangular waveform and outputs the same to the current source 1012.

The current source 1012 generates a current signal for controlling a light source. The current source 1012 generates a current signal corresponding to the voltage signal from the signal generator 1011. For example, the current source 1012 generates a current signal of a triangular waveform corresponding to the voltage signal of a triangular waveform and outputs the same to the laser light source 1013.

The laser light source 1013 emits a light whose frequency is modulated (frequency-modulated light). For example, the laser light source 1013 is configured using a distributed feedback (DFB) laser element. The laser light source 1013 generates a laser light with a frequency corresponding to the current signal from the current source 1012. The laser light generates laser light frequency-modulated within a range of, for example, 193.4024 to 193.4266 THz ($\lambda$ = 1549.903 to 1550.097 nm). For example, the laser light source 1013 generates laser light (frequency-modulated light) whose frequency is gradually increased or decreased in response to the current signal of a triangular waveform. The laser light source 1013 outputs the laser light to the optical device 1020.

The temperature regulator 1014 regulates the laser light source 1013 (especially, the laser element) to a predetermined temperature. The temperature regulator 1014 has, for example, a temperature sensor 1014A and a thermoelectric element (for example, a Peltier element), measures a temperature of the laser light source 1013 by the temperature sensor 1014A, and performs feedback control on the thermoelectric element based on a measurement result of the temperature sensor 1014A, thereby regulating the laser light source 1013 to a predetermined temperature.

The optical device 1020 is a device that irradiates the frequency-modulated light (measurement light) to the target object 1090 and causes the reflected light from the target object 1090 and the reference light (measurement light) to interfere with each other. The optical device 1020 uses part of the measurement light input from the generation device 1010 as the irradiation light to be irradiated to the target object 1090, uses part of the measurement light input from the generation device 1010 as the reference light, and causes the reflected light from the target object 1090 and the reference light to interfere with each other to generate interference light (interference wave). The optical device 1020 outputs the interference light (interference wave) generated as a result of causing the reflected light and the reference light to interfere with each other to the detection device 1030. The optical device 1020 includes a branch 1021, a circulator 1022, an optical system 1023, an optical waveguide 1024, and a combiner 1025.

The divider 1021 divides the frequency-modulated light of the generation device 1010. The divider 1021 is configured by, for example, an optical coupler. One divided light is output to the circulator 1022 and becomes the irradiation light to be irradiated to the target object 1090. The other divided light is output to the optical waveguide 1024 and becomes the reference light that is caused to interfere with the reflected wave.

The circulator 1022 guides the light (irradiation light) from the divider 1021 to the optical system 1023 and guides the light (reflected light) from the optical system 1023 to the combiner 1025.

The optical system 1023 irradiates the light toward the target object 1090 and condenses and outputs the reflected light. The optical system 1023 is configured by, for example, optical elements such as a lens, a mirror, and a prism. The optical system 1023 includes, for example, a light projection optical system that irradiates the irradiation light toward the target object 1090 and a light receiving optical system that condenses the reflected light. The optical system 1023 may have a function of scanning the irradiation light. The optical system 1023 outputs the condensed reflected light to the circulator 1022. Note that the reflected light is input to the combiner 1025 via the circulator 1022.

The optical waveguide 1024 constitutes an optical path of a predetermined length from the divider 1021 to the combiner 1025. The optical waveguide 1024 guides the reference light from the divider 1021 to the combiner 1025 over a predetermined optical path length. The optical waveguide 1024 is configured by, for example, an optical fiber.

The combiner 1025 combines the reflected light from the circulator 1022 and the reference light from the optical waveguide 1024. The combiner 1025 is configured by, for example, an optical coupler. The combiner 1025 functions as an interferer that causes the reflected light and the reference light to interfere with each other, and generates interference light (interference wave) by the interference between the reflected light and the reference light. The combiner 1025 outputs the interference light to the detection device 1030.

The detection device 1030 is a device that detects the interference light between the reflected light and the reference light and outputs a beat signal. The detection device 1030 includes a photoelectric converter 1031 and an amplifier 1032.

The photoelectric converter 1031 outputs an electric signal (current signal) corresponding to an intensity of the detected optical signal (here, interference light). The photoelectric converter 1031 is, for example, a photo diode. The interference light detected by the photoelectric converter 1031 is a wave whose amplitude changes periodically due to interference between the reflected light and reference light with different frequencies.

The amplifier 1032 converts and outputs the current signal of the photoelectric converter 1031 into a voltage signal. The amplifier 1032 is configured by, for example, a transimpedance amplifier. The beat signal output from the amplifier 1032 becomes a signal indicating a difference in frequency between the reflected light and the reference light. The beat frequency of the beat signal corresponds to a frequency of a beating component of the interference light. Additionally, the beat frequency of the beat signal corresponds to the difference in frequency between the reflected light and the reference light.

The signal processing device 1040 is a device that determines the distance to the target object 1090 based on the beat signal. The signal processing device 1040 includes an A/D converter, an arithmetic device, a storage device, and the like, which are not shown. The arithmetic device is configured by, for example, arithmetic processing devices such as a CPU, a GPU, an MPU, or the like. The storage device is a device that is configured by a main storage device and an auxiliary storage device and stores programs and data. When the arithmetic device executes a program stored in the storage device, various processing for measuring the distance to the target object 1090 is executed. In FIG. 19, various processing performed by the signal processing device 1040 is shown as functional blocks.

The signal processing device 1040 includes a signal obtaining unit 1041, an analysis unit 1042, and an output unit 1043. The signal obtaining unit 1041 receives the beat signal from the detection device 1030 as a digital signal. The signal obtaining unit 1041 is configured by, for example, an A/D converter (A/D conversion board, or the like). The analysis unit 1042 determines the distance to the target object 1090 based on the beat signal. The processing of the analysis unit 1042 will be described below. The output unit 1043 outputs an analysis result of the analysis unit 1042 to the outside. For example, the output unit 1043 outputs distance data indicating the distance to the target object 1090 and speed data indicating the relative speed of the target object 1090 to a vehicle ECU, which is an external device.

<Reference Description 3: Case Where Relative Speed Is High>

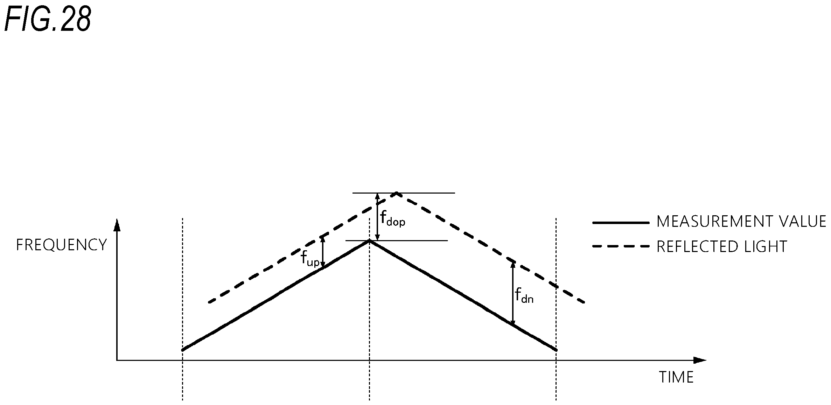

FIG. 28 illustrates an effect of a high relative speed of the target object 1090. Here, for description, magnitudes of the frequency $f_{up}$ and frequency $f_{dn}$ are set to be the same as those of the frequency $f_{up}$ and frequency $f_{dn}$ of FIG. 16.

As shown in FIG. 28, when the relative speed of the target object 1090 increases, the frequency of the reflected light during the gradual increase period may become higher than the frequency of the measurement light. However, when the beat frequency is determined by frequency analysis of the beat signal, an absolute value of the difference in frequency between the measurement light and the reflected light is determined, so the magnitude relation between the frequency of the measurement light and the frequency of the reflected light cannot be determined. For this reason, the frequency $f_{up}$ and frequency $f_{dn}$ determined by frequency analysis of the beat signal under the situation shown in FIG. 28 have the same values as those of the frequency $f_{up}$ and frequency $f_{dn}$ under the situation shown in FIG. 16. For this reason, when the frequency $f_{up}$ and frequency $f_{dn}$ determined under the situation shown in FIG. 28 are applied to Formulas (2) and (3) described above to determine the distance R, the distance to the target object cannot be accurately calculated.

In this way, when the relative speed of the target object 1090 increases and the frequency of the reflected light during the gradual increase period becomes higher than the frequency of the measurement light, the distance to the target object cannot be accurately calculated. Similarly, when the relative speed of the target object 1090 increases and the frequency of the reflected light during the gradual decrease period becomes lower than the frequency of the measurement light, the distance to the target object cannot be accurately calculated.

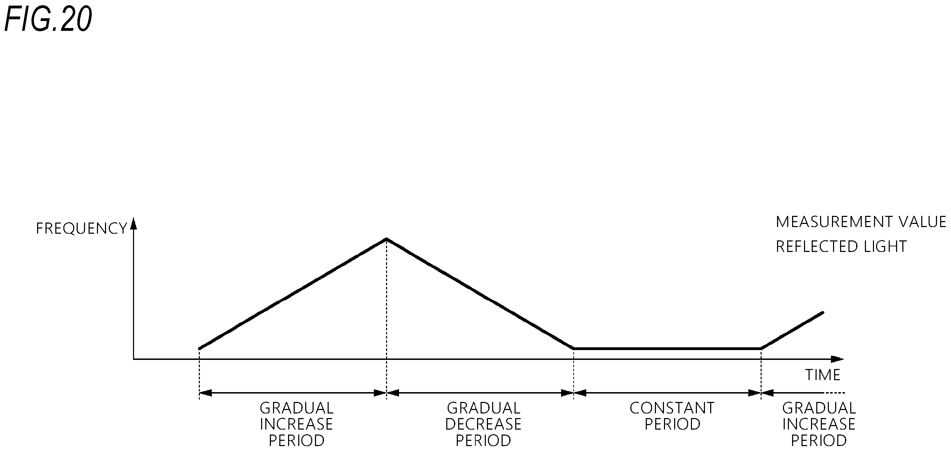

FIG. 20 illustrates a time variation of frequency of the frequency-modulated light. The horizontal axis in the drawing indicates time, and the vertical axis indicates frequency.

As shown in FIG. 20, the generation device 1010 generates measurement light frequency-modulated to repeat a gradual increase period, a gradual decrease period, and a constant period in a predetermined order. In other words, the generation device 1010 generates measurement light frequency-modulated to repeat a period including a gradual increase period, a gradual decrease period, and a constant period with a predetermined cycle. The constant period is a period during which frequency is constant. Note that the signal generator 1011 of the generation device 1010 outputs a voltage signal that increases a voltage during the gradual increase period, decreases the voltage during the gradual decrease period, and keeps the voltage constant during the constant period. In other words, the signal generator 1011 outputs a voltage signal with a constant period, in which a voltage is kept constant between triangular waves. When the signal generator 1011 outputs such a voltage signal, the current source 1012 outputs a current signal that increases the current during the gradual increase period, decreases the current during the gradual decrease period, and keeps the current constant during the constant period. As a result, the laser light source 1013 outputs light whose frequency varies over time (frequency-modulated light), as shown in FIG. 20.

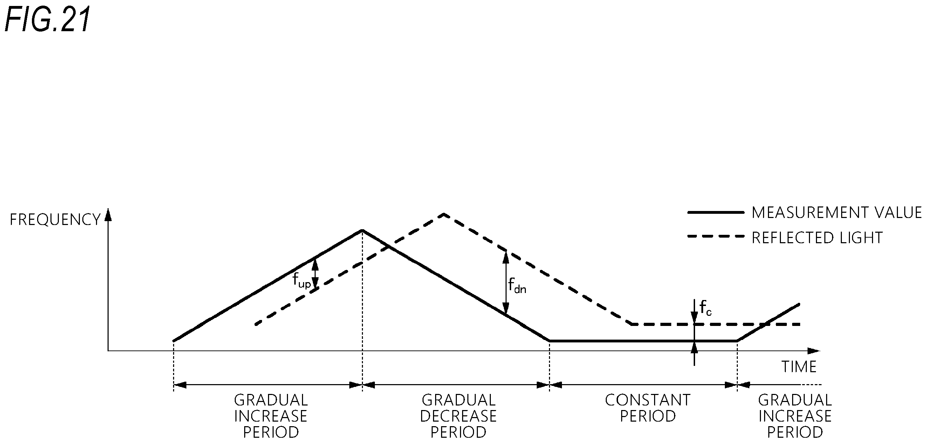

FIG. 21 illustrates time variations of frequencies of measurement light (irradiation light, reference light) and reflected light. The horizontal axis in the drawing indicates time, and the vertical axis indicates frequency.

The signal obtaining unit 1041 of the signal processing device 1040 accepts the beat signal from the detection device 1030 as a digital signal, and the analysis unit 1042 performs frequency analysis (for example, FFT analysis) on the beat signal. The analysis unit 1042 performs frequency analysis on the beat signal during the gradual increase period to obtain the frequency $f_{up}$ (first frequency). The analysis unit 1042 performs frequency analysis on the beat signal during the gradual decrease period to obtain the frequency $f_{dn}$ (second frequency). The analysis unit 1042 performs frequency analysis on the beat signal during the constant period to obtain the frequency $f_c$ (third frequency). $f_c$ indicates a difference in frequency between the measurement light (irradiation light, reference light) and the reflected light (specifically, an absolute value of the difference in frequency between the measurement light and the reflected light) during the constant period. For this reason, the frequency $f_c$ obtained by performing frequency analysis on the beat signal during the constant period indicates a shift amount of frequency (Doppler shift frequency) due to the Doppler effect (however, the frequency $f_c$ corresponds to an absolute value of the Doppler shift frequency $f_{dop}$).

Note that the frequencies $f_{up}$, $f_{dn}$, and $f_c$ obtained by the analysis unit 1042 all indicate the absolute values of the difference in frequency between the measurement light and the reflected light. Based on the frequencies $f_{up}$, $f_{dn}$, and $f_c$ obtained in this way, the analysis unit 1042 determines the distance (and relative speed) of the target object 1090 as follows.

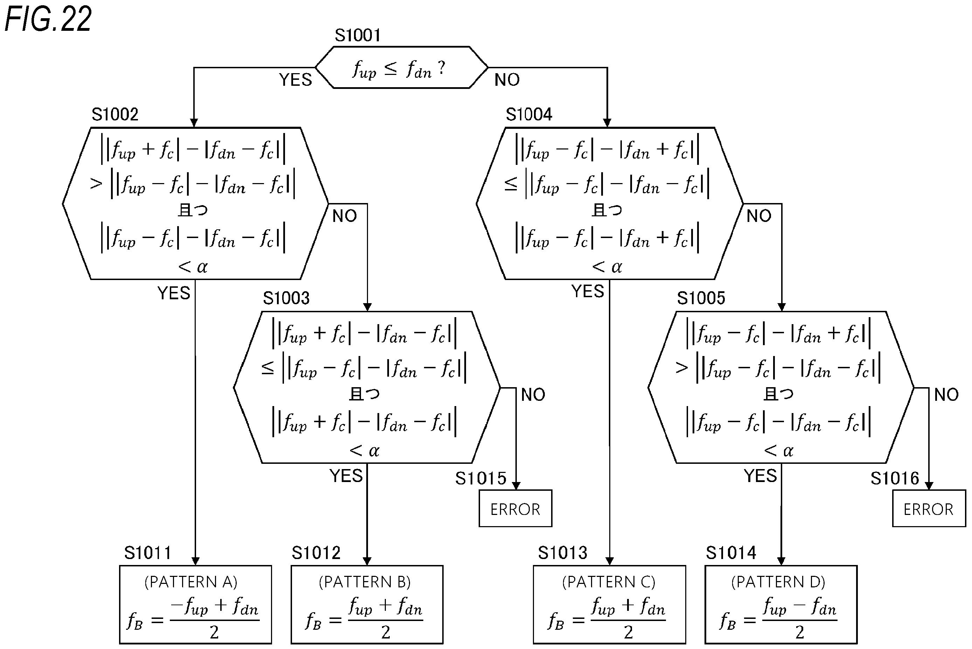

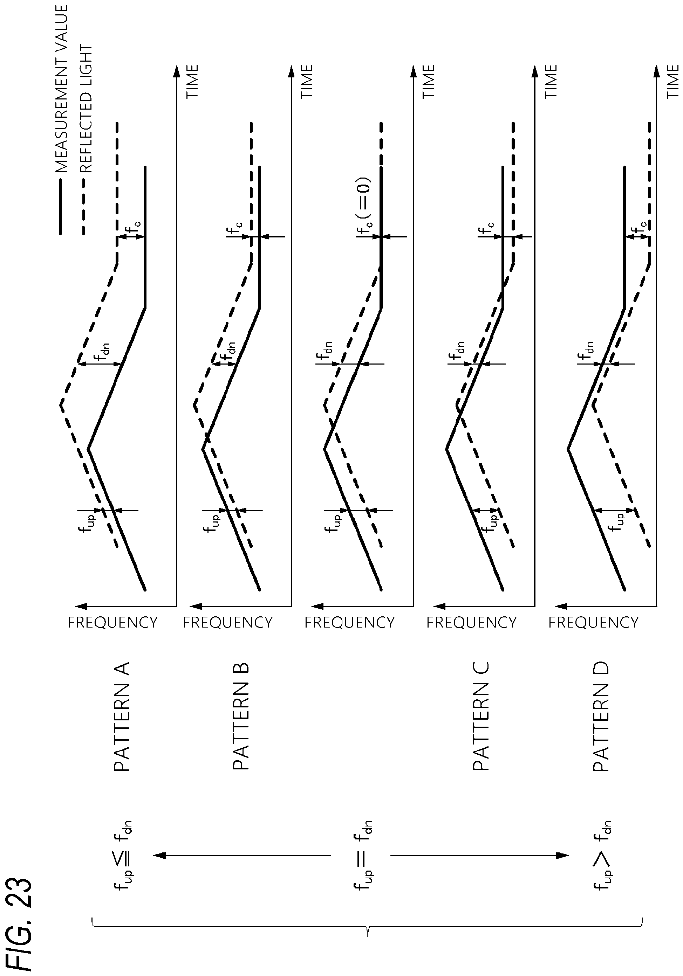

FIG. 22 is a flowchart of processing that is executed by the analysis unit 1042. Each processing in the drawing is implemented by the arithmetic processing device constituting the signal processing unit 1040 executing an analysis program. FIG. 23 illustrates various patterns of a magnitude relation between the measurement light and the reflected light. Note that in the case of patterns B and C in the drawing, the frequency $f_{up}$ and frequency $f_{dn}$ can be applied to Formulas (2) and (3) described above to determine the distance R. However, in the case of patterns A and D in the drawing, the relative speed of the target object 1090 increases, resulting in a situation where the distance R cannot be accurately calculated even when Formulas (2) and (3) described above are used.

· S1001 to S1005

The analysis unit 1042 compares the magnitude relation between the frequency $f_{up}$ and the frequency $f_{dn}$ to determine whether the frequency $f_{dn}$ is higher than the frequency $f_{up}$ (S1001). Here, the analysis unit 1042 determines whether the frequency $f_{dn}$ is higher than the frequency $f_{up}$ ($f_{up} < f_{dn}$). Here, when the frequency $f_{up}$ and the frequency $f_{dn}$ are the same, it is determined as YES in S1001 ($f_{up} \leq f_{dn}$). However, when the frequency $f_{up}$ and the frequency $f_{dn}$ are the same, it may be determined as NO in S1001.

When the magnitude relation between the measurement light and the reflected light corresponds to pattern A and pattern B in FIG. 23, the frequency $f_{dn}$ is higher than the frequency $f_{up}$, so the analysis unit 1042 determines YES in S1001. On the other hand, when the magnitude relation between the measurement light and the reflected light corresponds to pattern C and pattern D in FIG. 23, the frequency $f_{up}$ is higher than the frequency $f_{dn}$, so the analysis unit 1042 determines NO in S1001.

When the frequency $f_{dn}$ is higher than the frequency $f_{up}$ (YES in S1001), the analysis unit 1042 determines whether the following two conditions (condition A) are satisfied (S1002). Note that the determination in S1002 corresponds to a determination as to whether the frequency of the reflected light during the gradual increase period is higher than the frequency of the measurement light.

[Condition A]

Formula 1

$$\left| \left| f_{up} + f_c \right| - \left| f_{dn} - f_c \right| \right| > \left| \left| f_{up} - f_c \right| - \left| f_{dn} - f_c \right| \right|$$

**and**

$$\left| \left| f_{up} - f_c \right| - \left| f_{dn} - f_c \right| \right| < \alpha$$

$\alpha$ in condition A is a predetermined threshold value. In the case of pattern A, if there is no abnormality in the measurement result, the value on the right side of the first conditional expression is almost zero. Therefore, in the second conditional expression of condition A, by determining whether the value on the right side of the first conditional expression is less than the threshold value $\alpha$, it is determined whether there is any abnormality in the measurement result of the frequencies $f_{up}$, $f_{dn}$, and $f_c$. Note that if the error determination is unnecessary, the second condition expression of the two conditions of condition A may be eliminated. This is similar to conditions B to D described below.

If it is determined that condition A is satisfied (YES in S1002), the analysis unit 1042 determines that the magnitude relation corresponds to pattern A (S1011). On the other hand, if it is determined that condition A is not satisfied (NO in S1002), the analysis unit 1042 determines whether the following two conditions (condition B) are satisfied (S1003). Note that the determination in S1003 corresponds to a determination as to whether the frequency of the reflected light during the gradual increase period is lower than the frequency of the measurement light.

[Condition B]

Formula 2

$$\left| \left| f_{up} + f_c \right| - \left| f_{dn} - f_c \right| \right| \leq \left| \left| f_{up} - f_c \right| - \left| f_{dn} - f_c \right| \right|$$

**and**

$$\left| \left| f_{up} + f_c \right| - \left| f_{dn} - f_c \right| \right| < \alpha$$

$\alpha$ in condition B is a predetermined threshold value, as in condition A described above. In the case of pattern B, if there is no abnormality in the measurement result, the value of the left side of the first conditional expression is almost zero. Therefore, in the second conditional expression of condition B, by determining whether the value on the left side of the first conditional expression is less than the threshold value $\alpha$, it is determined whether there is any abnormality in the measurement result of the frequencies $f_{up}$, $f_{dn}$, and $f_c$.

If it is determined that condition B is satisfied (YES in S1003), the analysis unit 1042 determines that the magnitude relation corresponds to pattern B (S1012). On the other hand, if it is determined that condition B is not satisfied (NO in S1003), the analysis unit 1042 notifies an error (S1015). Note that when there is an abnormality in the measurement result of frequencies $f_{up}$, $f_{dn}$, and $f_c$, the value of the left side of the second conditional expression of condition A or condition B exceeds the threshold value $\alpha$, so neither condition A nor condition B is satisfied, resulting in an error.

When the frequency $f_{dn}$ is lower than the frequency $f_{up}$ (NO in S1001), the analysis unit 1042 determines whether the following two conditions (condition C) are satisfied (S1004). Note that the determination in S1004 corresponds to a determination as to whether the frequency of the reflected light during the gradual decrease period is higher than the frequency of the measurement light.

[Condition C]

Formula 3

$$\left|\left|f_{up} - f_c\right| - \left|f_{dn} + f_c\right|\right| \leq \left|\left|f_{up} - f_c\right| - \left|f_{dn} - f_c\right|\right|$$

**and**

$$\left|\left|f_{up} - f_c\right| - \left|f_{dn} + f_c\right|\right| < \alpha$$

$\alpha$ in condition C is a predetermined threshold, as in conditions A and B described above. In the case of pattern C, if there is no abnormality in the measurement result, the value of the left side of the first conditional expression is almost zero. Therefore, in the second conditional expression of condition C, by determining whether the value on the left side of the first conditional expression is less than the threshold value $\alpha$, it is determined whether there is any abnormality in the measurement result of the frequencies $f_{up}$, $f_{dn}$, and $f_c$.

If it is determined that condition C is satisfied (YES in S1004), the analysis unit 1042 determines that the magnitude relation corresponds to pattern C (S1013). On the other hand, if it is determined that condition C is not satisfied (NO in S1004), the analysis unit 1042 determines whether the following two conditions (condition D) are satisfied (S1005). Note that the determination in S1005 corresponds to a determination as to whether the frequency of the reflected light during the gradual decrease period is lower than the frequency of the measurement light.

[Condition D]

Formula 4

$$\left|\left|f_{up} - f_c\right| - \left|f_{dn} + f_c\right|\right| > \left|\left|f_{up} - f_c\right| - \left|f_{dn} - f_c\right|\right|$$

**and**

$$\left|\left|f_{up} - f_c\right| - \left|f_{dn} - f_c\right|\right| < \alpha$$

$\alpha$ in condition D is a predetermined threshold value, as in conditions A to C described above. In the case of pattern D, if there is no abnormality in the measurement result, the value on the right side of the first conditional expression is almost zero. Therefore, in the second conditional expression of condition D, by determining whether the value on the right side of the first conditional expression is less than the threshold value $\alpha$, it is determined whether there is any abnormality in the measurement result of the frequencies $f_{up}$, $f_{dn}$, and $f_c$.

If it is determined that condition D is satisfied (YES in S1005), the analysis unit 1042 determines that the magnitude relation corresponds to pattern D (S1014). On the other hand, if it is determined that condition D is not satisfied (NO in S1005), the analysis unit 1042 notifies an error (S1016). Note that when there is an abnormality in the measurement result of frequencies $f_{up}$, $f_{dn}$, and $f_c$, the value of the left side of the second conditional expression of condition C or condition D exceeds the threshold value $\alpha$, so neither condition C nor condition D is satisfied, resulting in an error.

As described above, the analysis unit 1042 determines the magnitude relation between the frequency of the measurement light and the frequency of the reflected light during the gradual increase period or gradual decrease period by performing the determinations in S1001 to S1005. For example, the analysis unit 1042 determines the magnitude relation between the frequency of the measurement light and the frequency of the reflected light during the gradual increase period on the basis of the frequencies $f_{up}$, $f_{dn}$, and $f_c$ by performing the determinations in S1001 to S1003. In addition, the analysis unit 1042 determines the magnitude relation between the frequency of the measurement light and the frequency of the reflected light during the gradual decrease period on the basis of the frequencies $f_{up}$, $f_{dn}$, and $f_c$ by performing the determinations in S1001, S1004, and S1005. In other words, the analysis unit 1042 performs determinations in S1001 to S1005 on the basis of the frequencies $f_{up}$, $f_{dn}$, and $f_c$, thereby determining whether the distance R can be calculated using Formulas (2) and (3) described above. Note that the order of determinations in S1001 to S1005 is not limited to thereto. In addition, the method for determining whether the frequency of the reflected light during the gradual increase period is higher than the frequency of the measurement light (whether the magnitude relation corresponds to pattern A), or whether the frequency of the reflected light during the gradual decrease period is lower than the frequency of the measurement light (whether the magnitude relation corresponds to pattern D) is not limited to the above (refer to variations below)

· S1011

If YES is determined in S1001 and condition A is satisfied (YES in S1002), the analysis unit 1042 determines that the magnitude relation corresponds to pattern A. In this case, the analysis unit 1042 calculates the frequency $f_B$ based on the following Formula (6) and calculates the distance R based on the frequency $f_B$ using Formula (2) described above (S1011).

$$f_B = (-f_{up} + f_{dn})/2 \cdots (6)$$

· S1012

If YES is determined in S1001 and condition B is satisfied (YES in S1003), the analysis unit 1042 determines that the magnitude relation corresponds to pattern B. In this case, the analysis unit 1042 calculates the frequency $f_B$ based on the following Formula (7) and calculates the distance R based on the frequency $f_B$ using Formula (2) described above (S1012).

$$f_B = (f_{up} + f_{dn})/2 \cdots (7)$$

· S1013

If NO is determined in S1001 and condition C is satisfied (YES in S1004), the analysis unit 1042 determines that the magnitude relation corresponds to pattern C (S1013). In this case, the analysis unit 1042 calculates the frequency $f_B$ based on Formula (7) and calculates the distance R based on the frequency $f_B$ using Formula (2) described above, as in the case of S1012 described above (S1013).

· S1014

If NO is determined in S1001 and condition D is satisfied (YES in S1005), the analysis unit 1042 determines that the magnitude relation corresponds to pattern D (S1013). In this case, the analysis unit 1042 calculates the frequency $f_B$ based on the following Formula (8) and calculates the distance R based on the frequency $f_B$ using Formula (2) described above (S1014).

$$f_B = (f_{up} - f_{dn})/2 \cdots (8)$$

As described above, the analysis unit 1042 determines the magnitude relation between the frequency of the measurement light and the frequency of the reflected light during the gradual increase period or gradual decrease period on the basis of the frequencies $f_{up}$, $f_{dn}$, and $f_c$ (S1001 to S1005), calculates the frequency $f_B$ based on the frequencies $f_{up}$ and $f_{dn}$ and the distance R based on the frequency $f_B$ by using the functions corresponding to the determination results (S1011 to S1014). With this, the distance R to the target object 1090 can be accurately calculated.

Note that, as shown in pattern B or pattern C, when the frequency of the reflected light during the gradual increase period is lower than the frequency of the measurement light and the frequency of the reflected light during the gradual decrease period is higher than the frequency of the measurement light, the analysis unit 1042 may calculate the distance R based on the frequencies $f_{up}$ and $f_{dn}$ by using the predetermined functions (Formulas (3) and (7) described above) (S1012, S1013). On the other hand, when the frequency of the reflected light during the gradual increase period is higher than the frequency of the measurement light as shown in pattern A, or when the frequency of the reflected light during the gradual decrease period is lower than the frequency of the measurement light as shown in pattern D, the calculation of the distance R using Formulas (3) and (7) becomes inaccurate. For this reason, in this case, the distance R is calculated based on the frequencies $f_{up}$ and $f_{dn}$ by using the functions (Formulas (6) and (8) described) different from Formulas (3) and (7) described above (S1011, S1014).

As described above, the frequency $f_c$ obtained by frequency analysis on the beat signal during the constant period corresponds to the shift amount of frequency (Doppler shift frequency) due to the Doppler effect. For this reason, the analysis unit 1042 may calculate the relative speed V using the following Formula (9), based on the frequency $f_c$ of the beat signal during the constant period.

$$V = (\lambda/2) \cdot f_c \cdots (9)$$

Note that when determining the relative speed V based on Formula (9) above, the analysis unit 1042 determines that the target object 1090 is moving in an approaching direction, if the frequency $f_{dn}$ is higher than the frequency $f_{up}$ (YES in S1001). On the other hand, if the frequency $f_{dn}$ is lower than the frequency $f_{up}$ (NO in S1001), it is determined that the target object 1090 is moving in a getting away direction. In this way, the analysis unit 1042 can determine the relative speed V of the target object 1090 and the direction in which the target object 1090 is moving (whether the target object is approaching or moving away). In other words, when the frequency $f_{dn}$ is higher than the frequency $f_{up}$, the analysis unit 1042 may calculate the Doppler shift frequency $f_{dop}$ as $f_{dop} = -f_c$, and calculate the relative speed V using Formula (5) described above. In addition, when the frequency $f_{dn}$ is lower than the frequency $f_{up}$, the analysis unit 1042 may calculate the Doppler shift frequency $f_{dop}$ as $f_{dop} = f_c$, and calculate the relative speed V using Formula (5) described above.

<As For Frequency of Calculation>

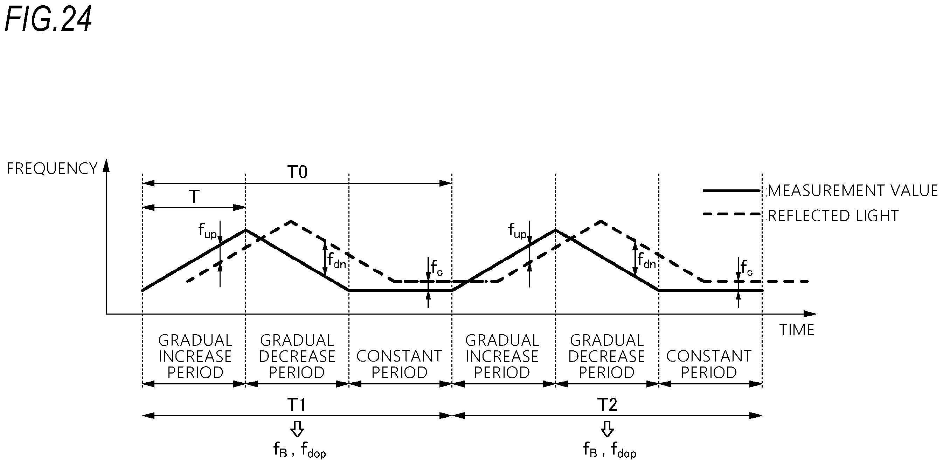

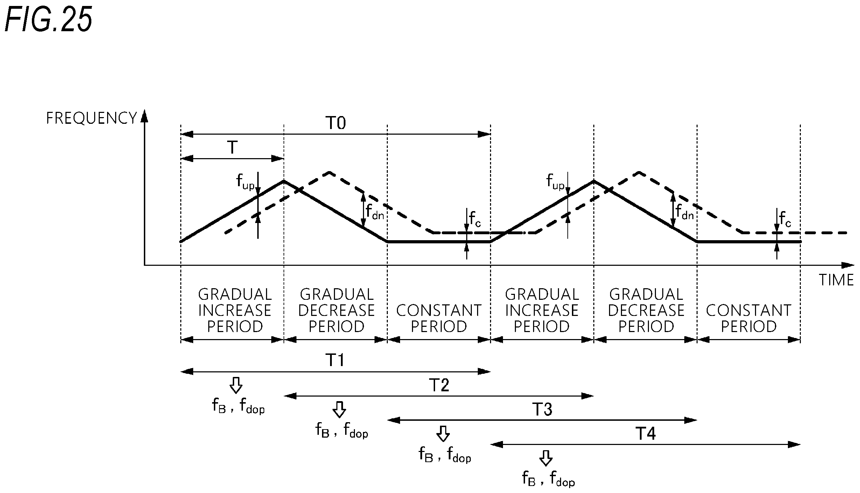

FIGS. 24 and 25 illustrate a frequency of calculation.

As described above, the generation device 1010 generates measurement light frequency-modulated to repeat the gradual increase period, the gradual decrease period, and the constant period in a predetermined order (refer to also FIG. 20). FIGS. 24 and 25 show that a period including a gradual increase period, a gradual decrease period, and a constant period is repeated with a predetermined cycle T0. When each period of the gradual increase period, the gradual decrease period, and the constant period is set as T, the period T0 (repetition cycle T0) is three times the period T.

In addition, as described above, the analysis unit 1042 performs frequency analysis on the beat signal during the gradual increase period to obtain the frequency $f_{up}$, performs frequency analysis on the beat signal during the gradual decrease period to obtain the frequency $f_{dn}$, and performs frequency analysis on the beat signal during the constant period to obtain the frequency $f_c$, thereby calculating the distance R and the relative speed V based on the frequencies $f_{up}$, $f_{dn}$, and $f_c$. In other words, in order to calculate distance R and the relative speed V, it is necessary to obtain the frequencies $f_{up}$, $f_{dn}$, and $f_c$, and the predetermined period T0 including the gradual increase period, the gradual decrease period, and the constant period is required. In the present embodiment, since it is necessary to provide a constant period, the repetition cycle T0 shown in FIGS. 24 and 25 is longer than the repetition cycle shown in FIG. 16 by the constant period, and is 1.5 times the repetition cycle shown in FIG. 16.

As shown in FIG. 24, the analysis unit 1042 may calculate the distance R and the relative speed V for each repetition cycle T0. That is, as shown in FIG. 24, the analysis unit 1042 may calculate the distance R and the relative speed V based on the frequencies $f_{up}$, $f_{dn}$, and $f_c$ during a certain period T1, and calculate the distance R and the relative speed V based on the frequencies $f_{up}$, $f_{dn}$, and $f_c$ during a next period T21 after the period T1. However, as shown in FIG. 24, when calculating the distance R and the relative speed V is repeated with the cycle T0, the temporal resolution deteriorates compared to the case of Reference Description 3.

Therefore, as shown in FIG. 25, the analysis unit 1042 repeats calculating the distance R and the relative speed V based on different combinations of frequencies $f_{up}$, $f_{dn}$, and $f_c$ with a cycle T shorter than the repetition cycle T0. That is, as shown in FIG. 25, the analysis unit 1042 calculates the distance R and the relative speed V for each cycle T by repeatedly performing the following (1) to (3) in order.

(1) Calculating the distance R and the relative speed V based on the frequencies $f_{up}$, $f_{dn}$, and $f_c$ during a period (for example, a period T1) in which the constant period follows the gradual increase period and gradual decrease period.
(2) Calculating the distance R and the relative speed V based on the frequencies $f_{up}$, $f_{dn}$, and $f_c$ during a period (for example, a period T2) in which the constant period is between the gradual increase period and gradual decrease period.
(3) Calculating the distance R and the relative speed V based on the frequencies $f_{up}$, $f_{dn}$, and $f_c$ during a period (for example, a period T3) in which the constant period precedes the gradual increase period and gradual decrease period.

That is, the analysis unit 1042 repeats obtaining the frequencies $f_{up}$, $f_{dn}$, and $f_c$ and calculating the distance R and the relative speed V during the period T0 including the gradual increase period, the gradual decrease period, and the constant period while shifting the period T0 by the cycle T shorter than the cycle T0. In other words, the analysis unit 1042 calculates the distance R and the relative speed V for each cycle T by repeating calculating the distance R and the relative speed V based on the frequencies $f_{up}$, $f_{dn}$, and $f_c$ during a certain period (for example, a period T1) and then calculating the distance R and the relative speed V based on the frequencies $f_{up}$, $f_{dn}$, and $f_c$ during a period (for example, a period T2) overlapping the period (for example, the period T1). This makes it possible to shorten the calculation cycle of the distance R and the relative speed V and increase the temporal resolution.

<Variation 1>

The method for determining whether the frequency of the reflected light during the gradual increase period is higher than the frequency of the measurement light (whether the magnitude relation corresponds to pattern A), or whether the frequency of the reflected light during the gradual decrease period is lower than the frequency of the measurement light (whether the magnitude relation corresponds to pattern D) is not limited to the determinations in S1001 to S1005 described above.

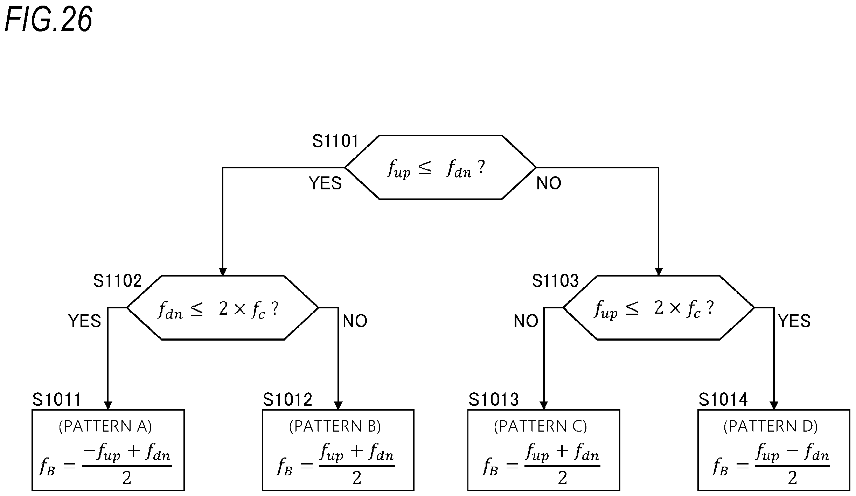

FIG. 26 is a flowchart of a variation. Each processing in the drawing is implemented by the arithmetic processing device constituting the signal processing unit 1040 executing an analysis program.

· S1101 to S1103

The analysis unit 1042 compares the magnitude relation between the frequency $f_{up}$ and the frequency $f_{dn}$ to determine whether the frequency $f_{dn}$ is higher than the frequency $f_{up}$ (S1101). This processing is similar to S1001 described above.

If the frequency $f_{dn}$ is higher than the frequency $f_{up}$ (YES in S1101), the analysis unit 1042 determines whether the frequency $f_{dn}$ is lower than two times the frequency $f_c$ (S1102). If the frequency $f_{dn}$ is lower than two times the frequency $f_c$ (YES in S1102), the analysis unit 1042 determines that the magnitude relation between the measurement light and the reflected light corresponds to pattern A in FIG. 23 (S1011). On the other hand, if the frequency $f_{dn}$ is higher than two times the frequency $f_c$ (NO in S1102), the analysis unit 1042 determines that the magnitude relation between the measurement light and the reflected light corresponds to pattern B in FIG. 23 (S1012).

In addition, if the frequency $f_{dn}$ is lower than the frequency $f_{up}$ (NO in S1101), the analysis unit 1042 determines whether the frequency $f_{up}$ is lower than two times the frequency $f_c$ (S1103). If the frequency $f_{up}$ is higher than two times the frequency $f_c$ (NO in S1103), the analysis unit 1042 determines that the magnitude relation between the measurement light and the reflected light corresponds to pattern C in FIG. 23 (S1013). On the other hand, if the frequency $f_{up}$ is lower than two times the frequency $f_c$ (YES in S1103), the analysis unit 1042 determines that the magnitude relation between the measurement light and the reflected light corresponds to pattern D in FIG. 23 (S1014).

As described above, the analysis unit 1042 determines the magnitude relation between the frequency of the measurement light and the frequency of the reflected light during the gradual increase period on the basis of the frequencies $f_{up}$, $f_{dn}$, and $f_c$ by performing the determinations in S1101 to S1102. In addition, the analysis unit 1042 determines the magnitude relation between the frequency of the measurement light and the frequency of the reflected light during the gradual decrease period on the basis of the frequencies $f_{up}$, $f_{dn}$, and $f_c$ by performing the determinations in S1101 and S1103. In other words, the analysis unit 1042 performs determinations in S1101, S1102, and S1103 on the basis of the frequencies $f_{up}$, $f_{dn}$, and $f_c$, thereby determining whether the distance R can be calculated using Formulas (2) and (3) described above.

The analysis unit 1042 calculates the frequency $f_B$ based on the frequencies $f_{up}$ and $f_{dn}$ using the functions corresponding to the determination results in S1101 to S1103 (S1011 to S1014) and calculates the distance R based on the frequency $f_B$. Note that the processing of S1011 to S1014 in FIG. 26 is similar to the processing of S1011 to S1014 in FIG. 22. With this, even in the variation, the distance R to the target object 1090 can be accurately calculated.

< Variation 2>

In the above description, the constant period is provided after the gradual decrease period. However, the order of the gradual increase period, the gradual decrease period, and the constant period is not limited thereto.

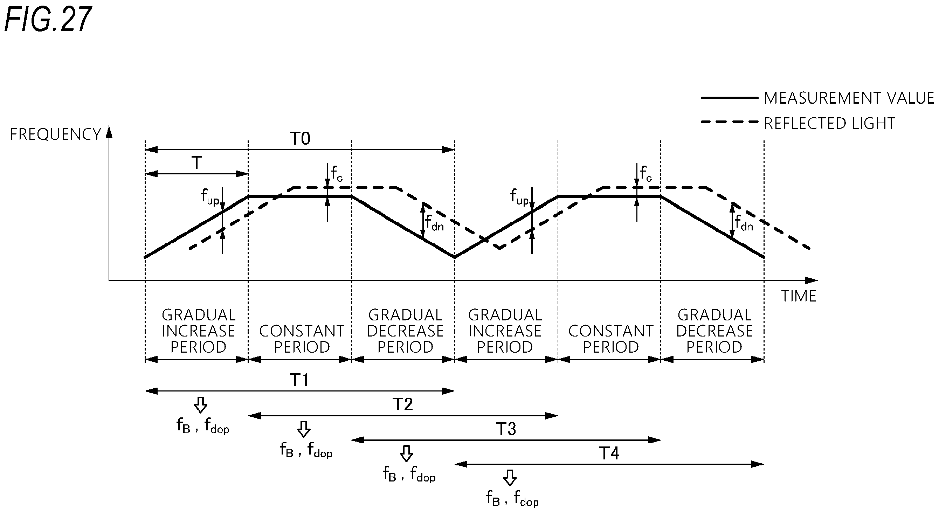

FIG. 27 illustrates frequencies of the measurement light and the reflected light in a variation. In the drawing, the time variation of frequency of frequency-modulated light is shown, with the horizontal axis in the drawing indicating time and the vertical axis indicating frequency.

In a variation, the constant period is provided after the gradual increase period. As shown in FIG. 27, the generation device 1010 of the variation generates measurement light frequency-modulated to repeat the gradual increase period, the constant period, and the gradual decrease period in order.

Also in the variation, the analysis unit 1042 can determine the beat frequencies $f_{up}$, $f_{dn}$, and $f_c$ corresponding to each of the gradual increase period, the gradual decrease period, and the constant period, and calculate the distance R and the relative speed V based on the three beat frequencies $f_{up}$, $f_{dn}$, and $f_c$.

Also in the variation, as shown in FIG. 27, the analysis unit 1042 preferably repeats calculating the distance R and the relative speed V based on different combinations of frequencies $f_{up}$, $f_{dn}$, and $f_c$ with a cycle T shorter than the repetition cycle T0. This makes it possible to shorten the calculation cycle of the distance R and the relative speed V and increase the temporal resolution. However, the analysis unit 1042 may also calculate the distance R and the relative speed V for each repetition cycle T0.

=== Sub-conclusion ===

The measurement apparatus 1001 includes the generation device 1010, the optical device 1020, the detection device 1030, and the signal processing device 1040. As shown in FIG. 16, the signal processing device 1040 determines the beat frequencies $f_{up}$ and $f_{dn}$ corresponding to each of the gradual increase period and the gradual decrease period and calculates the distance R based on the beat frequencies $f_{up}$ and $f_{dn}$. However, as shown in FIG. 28, when the relative speed of the target object 1090 increases, the frequency of the reflected light during the gradual increase period may become higher than the frequency of the measurement light. In this case, if the distance R is calculated as in the case shown in FIG. 16, the distance to the target object may not be calculated accurately. Therefore, the generation device 1010 of the present embodiment generates the measurement light frequency-modulated to repeat the gradual increase period during which the frequency increases, the gradual decrease period during which the frequency decreases, and the constant period during which the frequency is constant in a predetermined order. In addition, the signal processing device 1040 determines the distance R to the target object based on the beat frequency $f_{up}$ (first frequency), $f_{dn}$ (second frequency), and $f_c$ (third frequency) corresponding to each of the gradual increase period, the gradual decrease period, and the constant period. In this way, the distance R to the target object is determined using not only the beat frequency $f_{up}$ (first frequency) and $f_{dn}$ (second frequency) but also the beat frequency $f_c$ (third frequency) during the constant period, making it possible to accurately calculate the distance to the target object.

The signal processing device 1040 determines the magnitude relation between the frequency of the measurement light and the frequency of the reflected light based on the frequencies $f_{up}$, $f_{dn}$, and $f_c$. For example, the signal processing device 1040 determines the magnitude relation between the frequency of the measurement light and the frequency of the reflected light during the gradual increase period or gradual decrease period on the basis of the frequencies $f_{up}$, $f_{dn}$, and $f_c$ by the processing of S1001 to S1005 in FIG. 22 or the processing of S1101 to S1103 in FIG. 26. Then, the signal processing device 1040 determines the distance R to the target object based on the frequencies $f_{up}$ (first frequency) and $f_{dn}$ (second frequency) using the functions (Formulas (3), (7), (6), and (8) described above) corresponding to the magnitude relation between the frequency of the measurement light and the frequency of the reflected light. This makes it possible to accurately calculate the distance to the target object.

In addition, as shown in pattern B or pattern C in FIG. 23, when the frequency of the reflected light during the gradual increase period is lower than the frequency of the measurement light and the frequency of the reflected light during the gradual decrease period is higher than the frequency of the measurement light, the signal processing device 1040 calculates the distance R based on the frequencies $f_{up}$ and $f_{dn}$ using the predetermined functions (Formulas (3) and (7) described above) (S1105, S1106). On the other hand, when the frequency of the reflected light during the gradual increase period is higher than the frequency of the measurement light as shown in pattern A, or when the frequency of the reflected light during the gradual decrease period is lower than the frequency of the measurement light as shown in pattern D, the distance R is calculated based on the frequencies $f_{up}$ and $f_{dn}$ using different functions (Formulas (6) and (8) described above) (S1104, S1107). This makes it possible to accurately calculate the distance to the target object.

Additionally, as shown in FIGS. 25 and 27, the signal processing device 1040 preferably repeats calculating the distance R based on the frequencies $f_{up}$, $f_{dn}$, and $f_c$ with a cycle (for example, the cycle T) shorter than the repetition cycle T0 of the frequency-modulated light. With this, even when the repetition cycle T0 becomes long due to the constant period, the calculation cycle of the distance R can be shortened.

<Overall Configuration>

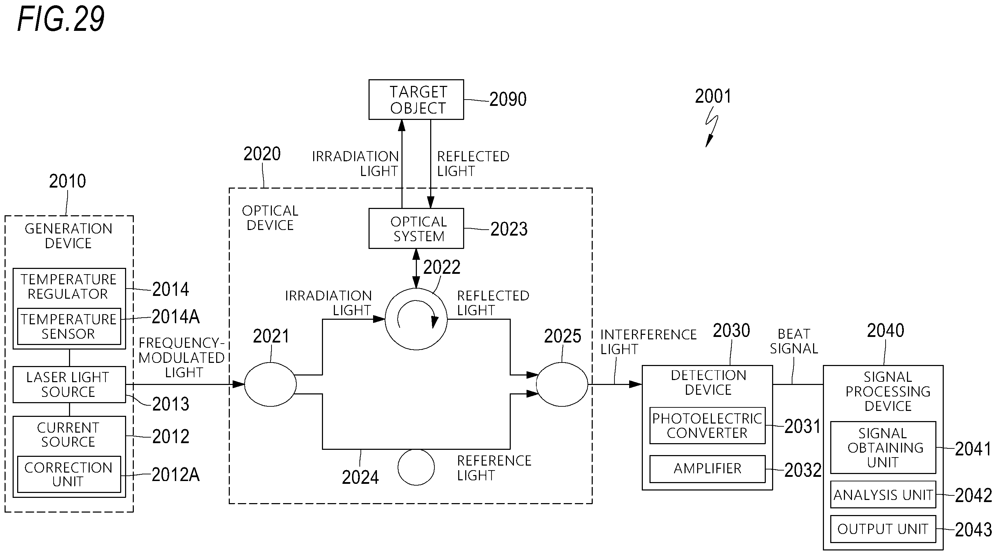

FIG. 29 illustrates an overall configuration of a measurement apparatus 2001.

The measurement apparatus 2001 is an apparatus for measuring a distance to a target object 2090. The measurement apparatus 2001 has a function as a so-called LiDAR. The measurement apparatus 2001 measures the distance to the target object 2090 using the FMCW method. That is, the measurement apparatus 2001 irradiates frequency-modulated measurement light (irradiation light) to the target object 2090, causes reflected light from the target object 2090 and the measurement light (reference light) to interfere with each other, and measures a distance to the target object 2090 based on a frequency (beat frequency) of a beat signal that is a detection result of interference light. Note that the measurement apparatus 2001 can measure not only the distance to the target object 2090 but also a relative speed to the target object 2090.

The measurement apparatus 2001 includes a generation device 2010, an optical device 2020, a detection device 2030, and a signal processing device 2040.

The generation device 2010 is a device for generating a light whose frequency is modulated (frequency-modulated light). The generation device 2010 outputs the frequency-modulated light to the optical device 2020. Part of the light (measurement light) output from the generation device 2010 becomes irradiation light to be irradiated to the target object 2090, and part thereof becomes reference light that is caused to interfere with the reflected light. The generation device 2010 includes a current source 2012, a laser light source 2013, and a temperature regulator 2014.

The current source 2012 generates a current signal for controlling the laser light source 2013. As described below, the current source 2012 includes a correction unit 2012A. The correction unit 2012A corrects the current signal input to the laser light source 2013 based on correction data. The correction unit 2012A will be described below.

The laser light source 2013 emits a light whose frequency is modulated (frequency-modulated light). For example, the laser light source 2013 is configured using a distributed feedback (DFB) laser element. The laser light source 2013 generates a laser light with a frequency corresponding to the current signal from the current source 2012. The laser light generates laser light frequency-modulated within a range of, for example, 193.4024 to 193.4266 THz ($\lambda$ = 1549.903 to 1550.097 nm). For example, the laser light source 2013 generates laser light (frequency-modulated light) whose frequency is gradually increased or decreased in response to the current signal of a triangular waveform. The laser light source 2013 outputs the laser light to the optical device 2020.

The temperature regulator 2014 regulates the laser light source 2013 (especially, the laser element) to a predetermined temperature. The temperature regulator 2014 has, for example, a temperature sensor 2014A and a thermoelectric element (for example, a Peltier element), measures a temperature of the laser light source 2013 by the temperature sensor 2014A, and performs feedback control on the thermoelectric element based on a measurement result of the temperature sensor 2014A, thereby regulating the laser light source 2013 to a predetermined temperature.

The optical device 2020 is a device that irradiates the frequency-modulated light (measurement light) to the target object 2090 and causes the reflected light from the target object 2090 and the reference light (measurement light) to interfere with each other. The optical device 2020 uses part of the measurement light input from the generation device 2010 as the irradiation light to be irradiated to the target object 2090, uses part of the measurement light input from the generation device 2010 as the reference light, and causes the reflected light from the target object 2090 and the reference light to interfere with each other to generate interference light (interference wave). The optical device 2020 outputs the interference light (interference wave) generated as a result of causing the reflected light and the reference light to interfere with each other to the detection device 2030. The optical device 2020 includes a branch 2021, a circulator 2022, an optical system 2023, an optical waveguide 2024, and a combiner 2025.

The divider 2021 divides the frequency-modulated light of the generation device 2010. The divider 2021 is configured by, for example, an optical coupler. One divided light is output to the circulator 2022 and becomes the irradiation light to be irradiated to the target object 2090. The other divided light is output to the optical waveguide 2024 and becomes the reference light that is caused to interfere with the reflected wave.

The circulator 2022 guides the light (irradiation light) from the divider 2021 to the optical system 2023 and guides the light (reflected light) from the optical system 2023 to the combiner 2025.

The optical system 2023 irradiates the light toward the target object 2090 and condenses and outputs the reflected light. The optical system 2023 is configured by, for example, optical elements such as a lens, a mirror, and a prism. The optical system 2023 includes, for example, a light projection optical system that irradiates the irradiation light toward the target object 2090 and a light receiving optical system that condenses the reflected light. The optical system 2023 may have a function of scanning the irradiation light. The optical system 2023 outputs the condensed reflected light to the circulator 2022. Note that the reflected light is input to the combiner 2025 via the circulator 2022.

The optical waveguide 2024 constitutes an optical path of a predetermined length from the divider 2021 to the combiner 2025. The optical waveguide 2024 guides the reference light from the divider 2021 to the combiner 2025 over a predetermined optical path length. The optical waveguide 2024 is configured by, for example, an optical fiber.

The combiner 2025 combines the reflected light from the circulator 2022 and the reference light from the optical waveguide 2024. The combiner 2025 is configured by, for example, an optical coupler. The combiner 2025 functions as an interferer that causes the reflected light and the reference light to interfere with each other, and generates interference light (interference wave) by the interference between the reflected light and the reference light. The combiner 2025 outputs the interference light to the detection device 2030.

The detection device 2030 is a device that detects the interference light between the reflected light and the reference light and outputs a beat signal. The detection device 2030 includes a photoelectric converter 2031 and an amplifier 2032.

The photoelectric converter 2031 outputs an electric signal (current signal) corresponding to an intensity of the detected optical signal (here, interference light). The photoelectric converter 2031 is, for example, a photo diode. The interference light detected by the photoelectric converter 2031 is a wave whose amplitude changes periodically due to interference between the reflected light and reference light with different frequencies.

The amplifier 2032 converts and outputs the current signal from the photoelectric converter 2031 into a voltage signal. The amplifier 2032 is configured by, for example, a transimpedance amplifier. The beat signal output from the amplifier 2032 becomes a signal indicating a difference in frequency between the reflected light and the reference light. The beat frequency of the beat signal corresponds to a frequency of a beating component of the interference light. Additionally, the beat frequency of the beat signal corresponds to the difference in frequency between the reflected light and the reference light.

The signal processing device 2040 is a device that determines the distance to the target object 2090 based on the beat signal. The signal processing device 2040 includes an A/D converter, an arithmetic device, a storage device, and the like, which are not shown. The arithmetic device is configured by, for example, arithmetic processing devices such as a CPU, a GPU, an MPU, or the like. The storage device is a device that is configured by a main storage device and an auxiliary storage device and stores programs and data. When the arithmetic device executes a program stored in the storage device, various processing for measuring the distance to the target object 2090 is executed. In FIG. 29, various processing performed by the signal processing device 2040 is shown as functional blocks.

The signal processing device 2040 includes a signal obtaining unit 2041, an analysis unit 2042, and an output unit 2043. The signal obtaining unit 2041 receives the beat signal from the detection device 2030 as a digital signal. The signal obtaining unit 2041 is configured by, for example, an A/D converter (A/D conversion board, or the like). The analysis unit 2042 determines the distance to the target object 2090 based on the beat signal. The processing of the analysis unit 2042 will be described below. The output unit 2043 outputs an analysis result of the analysis unit 2042 to the outside. For example, the output unit 2043 outputs distance data indicating the distance to the target object 2090 and speed data indicating the relative speed of the target object 2090 to a vehicle ECU, which is an external device.

<Reference Description 4: Delay in response of light source>

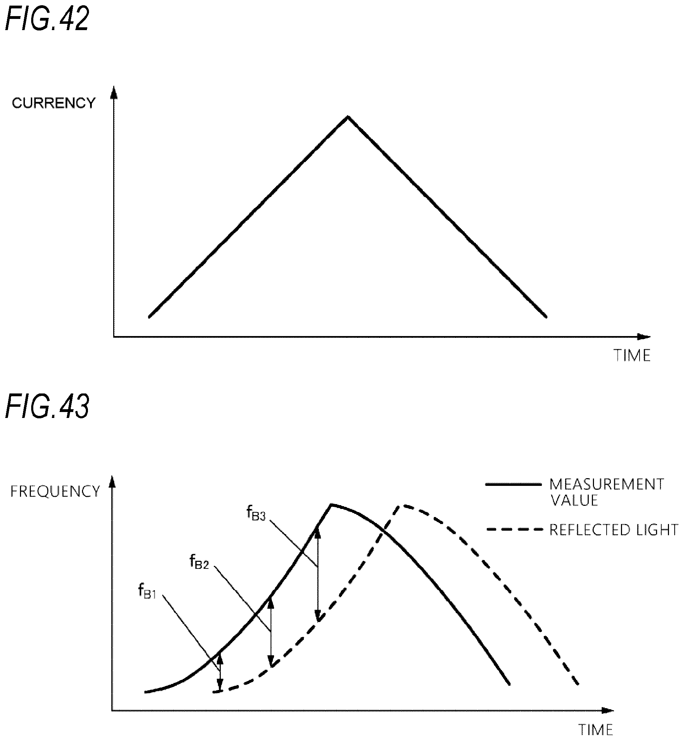

FIGS. 42 and 43 illustrates a delay in response of the laser light source 2013. FIG. 42 is a graph showing the time variation of the input current input to the laser light source 2013, with the horizontal axis indicating time and the vertical axis indicating current. FIG. 43 is a graph showing time variations of the frequencies of the measurement light (irradiation light, reference light) and the reflected light, with the horizontal axis indicating time and the vertical axis indicating frequency.

In the actual laser light source 2013, there is a delay in response after the input current varies until the frequency of the laser light varies. As a result, even when a current signal of a triangular waveform is input to the laser light source 2013 as shown in FIG. 42, the frequency of the laser light output from the laser light source 2013 does not increase or decrease linearly over time, as shown in FIG. 43. When the frequency varies non-linearly as such, the difference in frequency between the measurement light (irradiation light, reference light) and the reflected light does not remain constant (frequencies $f_{B1}$, $f_{B2}$, and $f_{B3}$ shown in FIG. 43 do not remain constant).

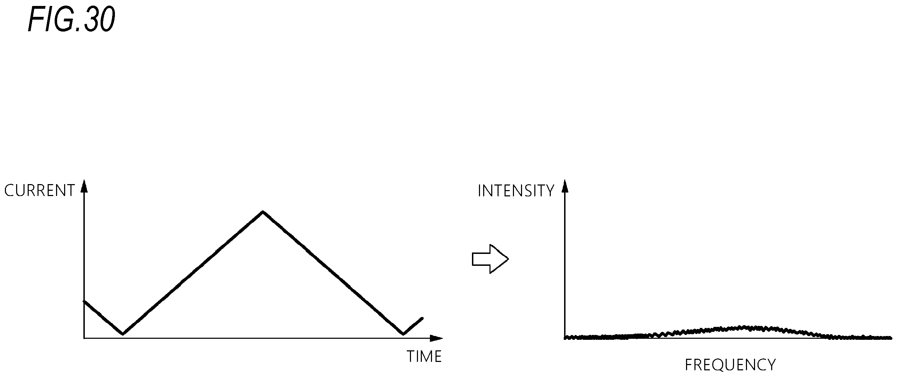

FIG. 30 is a reference illustration diagram showing a relation between the input current input to the laser light source 2013 and the frequency analysis result (FFT analysis result) of the beat signal when the input current is not corrected. The graph on the left side in the drawing shows the time variation of the input current to the laser light source 2013. The graph on the right side in the drawing shows a result of frequency analysis (FFT analysis) on the beat signal. Due to the effect of the delay in response of the laser light source 2013 (refer to FIG. 43), as shown on the right side in FIG. 30, even when frequency analysis (FFT analysis) is performed on the beat signal, it is difficult for a peak in intensity to appear at a specific frequency. For this reason, when the current signal input to the laser light source 2013 is a triangular wave, it is difficult to determine the beat frequency $f_B$ by frequency analysis on the beat signal, resulting in making it difficult to determine the distance R based on Formula (2) described above.

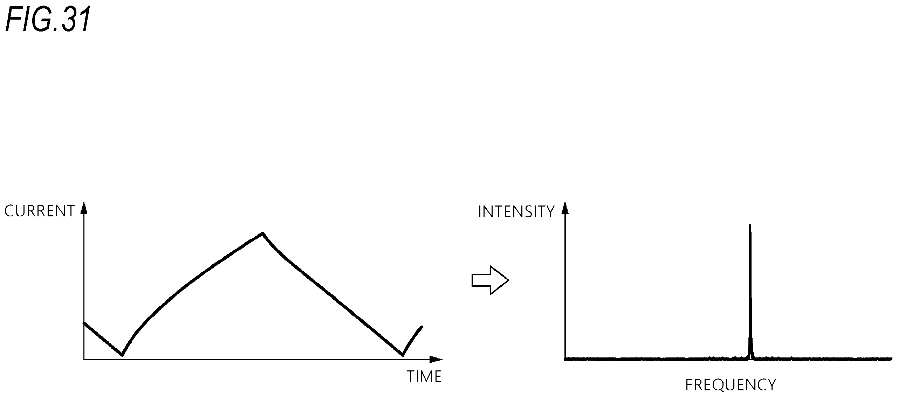

FIG. 31 illustrates an outline of a measurement method of the present case. The graph on the left side in the drawing shows the time variation of the input current to the laser light source 2013. In the present case, a current signal of a triangular waveform in which current increases or decreases linearly over time (refer to the left side in FIG. 30) is corrected into a current signal in which current varies non-linearly over time, and the corrected current signal (refer to the left side in FIG. 31; corrected current) is input to the laser light source 2013. The current signal (corrected current) shown on the left side in FIG. 31 has been corrected based on the time variation of the frequency of the frequency-modulated light at the time when the current signal (refer to the left side in FIG. 30) in which current varies linearly over time has been input to the laser light source 2013. Due to the effect of the delay in response of the laser light source 2013, when the current signal (corrected current) shown on the left side in FIG. 31 is input to the laser light source 2013, the frequency of the laser light output from the laser light source 2013 increases or decreases linearly over time. As a result, as shown on the right side in FIG. 31, when frequency analysis (FFT analysis) is performed on the beat signal, a peak in intensity appears at a specific frequency. This makes it possible to measure the distance by the FMCW method using the laser light source 2013 with a delay in response. Below, the measurement method of the present case will be described in detail.

<Measurement Method>

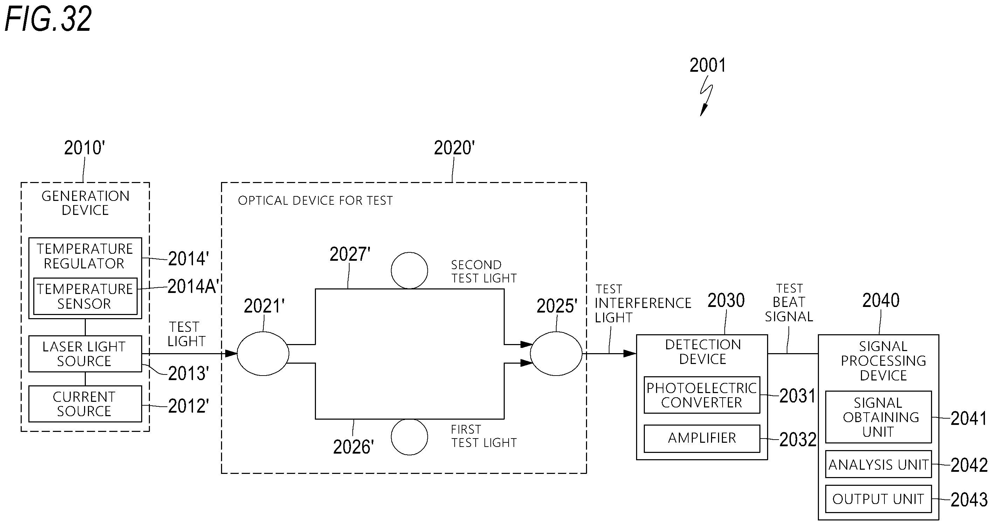

FIG. 32 illustrates a correction data obtaining apparatus 2001'.

The correction data obtaining apparatus 2001' is an apparatus that obtains correction data for correcting a current signal input to the laser light source 2013'. The correction data obtaining apparatus 2001' includes a generation device 2010', an optical device 2020' for test, a detection device 2030', and a signal processing device 2040'. Some components of the correction data obtaining apparatus 2001' have a common structure to the components of the measurement apparatus 2001 described above. The correction data obtaining apparatus 2001' and the measurement apparatus 2001 may be provided as separate apparatuses, or some components of the measurement apparatus 2001 may be used as the correction data obtaining apparatus 2001' (described below). Components that are common to the components of the measurement apparatus 2001 described above are denoted with common reference signs and descriptions thereof may be omitted.

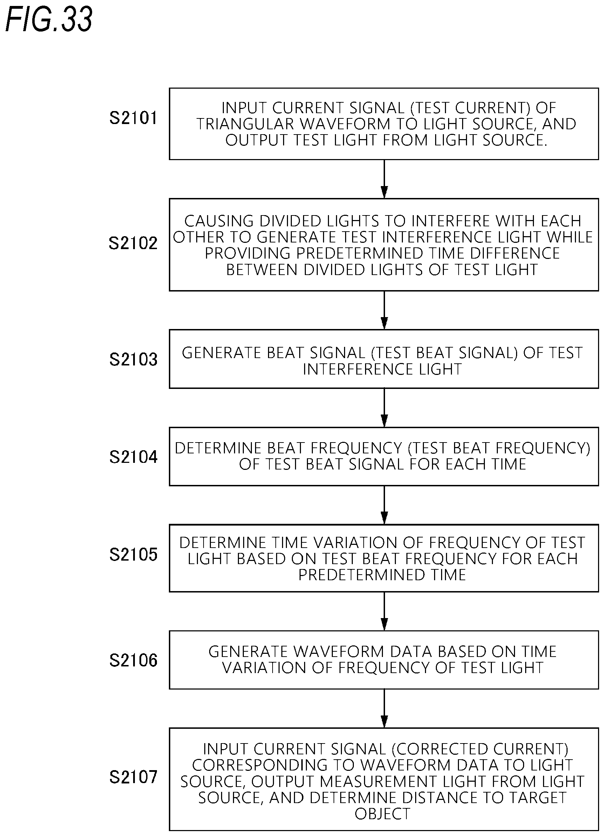

FIG. 33 is a flowchart of a measurement method of the present embodiment. S2101 to S2106 in the drawing are processing performed by the correction data obtaining apparatus 2001'. Note that S2101 is processing performed by the generation device 2010', S2102 is processing performed by the optical device 2020' for test, S2103 is processing performed by the detection device 2030', and S2104 to S2106 are processing performed by the signal processing device 2040'. S2107 is processing performed by the measurement apparatus 2001 (refer to FIG. 29). However, some of the processing in S2101 to S2106 (for example, S2106) may be performed by the measurement apparatus 2001 (refer to FIG. 29).

<As for S2101>

The generation device 2010' inputs a current signal of a triangular waveform (test current) to the laser light source 2013' and outputs test light (frequency-modulated light) from the laser light source 2013' (S2101).

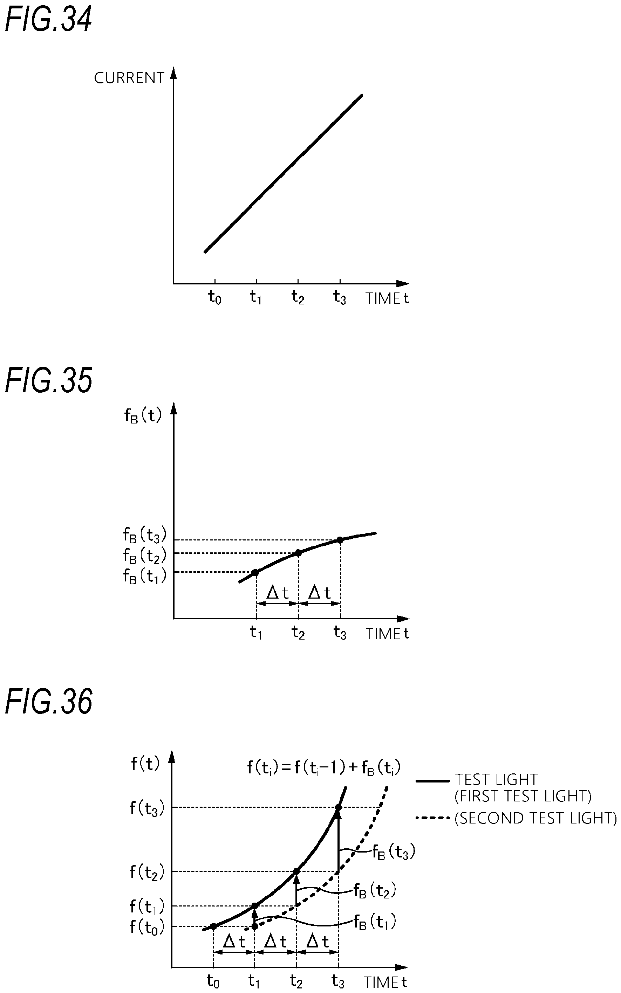

In S2101, the current source 2012' generates a current signal (current signal of a triangular waveform; test current) in which current increases or decreases linearly over time, and inputs the test current to the laser light source 2013'. FIG. 34 is a graph of the test current output by the current source 2012' in S2101. In FIG. 34, the test current during the gradual increase period is shown. The test current varies (here, increases) linearly over time, and a ratio of an amount of change in current to an amount of change in time (corresponding to the slope of the graph) is constant.

The laser light source 2013' outputs light (test light) frequency-modulated in response to the test current (S2101). As described above, the laser light source 2013' has a delay in response after the input current varies until the frequency of the laser light varies. For this reason, the frequency of the test light output from the laser light source 2013' varies non-linearly over time (refer to FIG. 43).

<As for S2102>

The optical device 2020' for test divides the test light into first test light and second test light, provides a predetermined time difference between the first test light and the second test light, and causes the first test light and the second test light to interfere with each other to generate test interference light (S2102).

As shown in FIG. 32, the optical device 2020' for test includes a divider 2021', a combiner 2025', a first optical waveguide 2026', and a second optical waveguide 2027'. The divider 2021' divides the test light (frequency-modulated light) from the generation device 2010'. One divided light is output to the first optical waveguide 2026' and becomes the first test light. The other divided light is output to the second optical waveguide 2027' and becomes the second test light. The first optical waveguide 2026' guides the first test light from the divider 2021' to the combiner 2025' over a predetermined optical path length. The second optical waveguide 2027' guides the second test light from the divider 2021' to the combiner 2025' over a longer optical path length than the first optical waveguide 2026'. Due to the difference in optical path length between the first optical waveguide 2026' and the second optical waveguide 2027', a predetermined time difference ($\Delta t$) is provided between the first test light and the second test light. Here, because the second optical waveguide 2027' has a longer optical path length than the first optical waveguide 2026', the second test light arrives at the combiner 2025' later than the first test light by the predetermined time difference ($\Delta t$). The combiner 2025' combines the first test light and the second test light. The combiner 2025' functions as an interferer that causes the reflected light and the reference light to interfere with each other, and generates interference light by the interference between the first test light and the second test light. In the following description, the interference light generated by the interference between the first test light and the second test light is referred to as test interference light.

Note that the first optical waveguide 2026' and the second optical waveguide 2027' are both configured by optical fibers, and the first test light and the second test light are both guided between the divider 2021' and the combiner 2025' by the optical waveguides configured by the optical fibers. For this reason, there are advantages in that noise is less likely to be mixed into the first test light and the second test light, and noise is also less likely to be mixed into the test interference light (in contrast, in the measurement apparatus 2001 of FIG. 29, noise is likely to be mixed into the interference light because the light is received from the outside of the measurement apparatus 2001). In addition, the first optical waveguide 2026' and the second optical waveguide 2027' are configured to have a predetermined optical path length, so that it is easy to provide a predetermined time difference (known time difference) between the first test light and the second test light (in contrast, when the reflected light is used as the second test light, it is difficult to provide a predetermined time difference between the first test light and the second test light.)

<As for S2103>

The detection device 2030' detects the test interference light and outputs a beat signal of the test interference light (S2103). In the following description, the beat signal of the test interference light may be referred to as a test beat signal. Note that the configuration of the detection device 2030' is similar to the detection device 2030 of the measurement apparatus 2001.

<As for S2104>

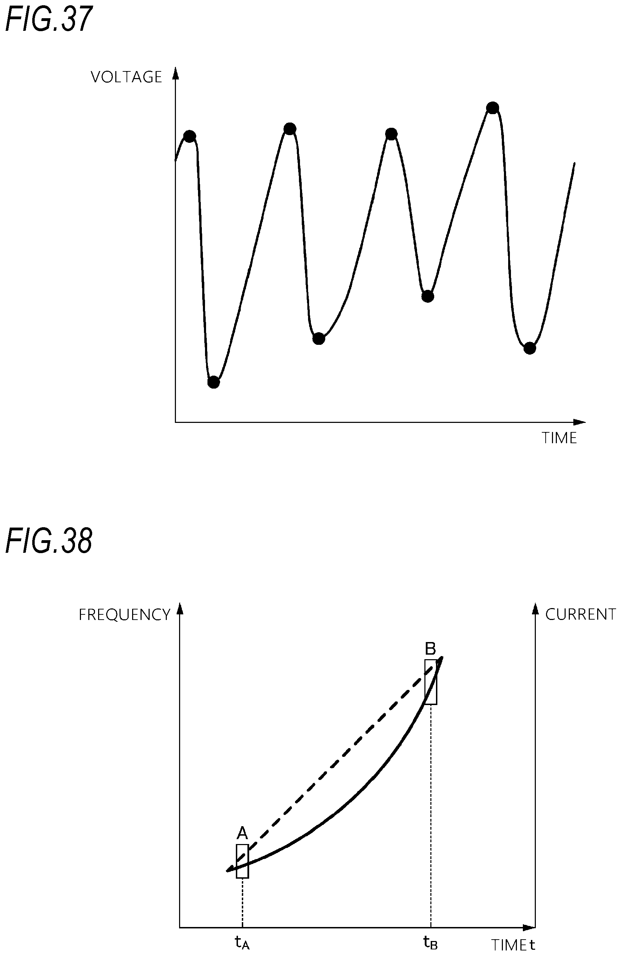

In S2104, the analysis unit 2042' measures a beat frequency (test beat frequency) of the test beat signal for each predetermined time (S2104). FIG. 37 illustrates a measurement method of a beat frequency. The graph in the drawing indicates a test beat signal, with the horizontal axis indicating time and the vertical axis indicating voltage.
The analysis unit 2042' first determines a time (peak time) at which the test beat signal peaks. The black round mark on the graph in the drawings indicates a peak (local extremum; local maximum value or local minimum value) of the test beat signal. For example, the analysis unit 2042' sequentially measures a time at which the sign of the slope (differential value of the beat signal) of the voltage of the test beat signal changes, as the peak time. Here, the analysis unit 2042' measures a peak time at which the test beat signal becomes a local maximum value (a time at which the sign of the slope of the voltage changes from positive to negative) and a peak time at which the test beat signal becomes a local minimum value (a time at which the sign of the slope of the voltage changes from negative to positive), respectively. However, the analysis unit 2042' may measure only the peak time of the local maximum value of the test beat signal, or may measure only the peak time of the local minimum value of the test beat signal. Note that, instead of measuring each peak time of all peaks of the test beat signal, the analysis unit 2042' may detect the peak time, for example, every predetermined cycle or every elapse of a predetermined time. The analysis unit 2042' measures a plurality of peak times during the gradual increase period or the gradual decrease period.
Then, the analysis unit 2042' calculates a beat frequency of the test beat signal (test beat frequency) based on an interval between the two peak times. For example, the analysis unit 2042' calculates, based on an interval (time of one cycle of the test beat signal) between a peak time of a certain local maximum value of the test beat signal and a peak time of a next local maximum value, a beat frequency at that time (timing). Note that the analysis unit 2042' may calculate, based on an interval (a time of one cycle of the test beat signal) between a peak time of a certain local minimum value of the test beat signal and a peak time of a next local minimum value, a beat frequency at that time. In addition, the analysis unit 2042' may calculate, based on an interval (a time of a half cycle of the test beat signal) between a peak time of a certain local maximum value (or local minimum value) of the test beat signal and a peak time of a next local minimum value (or local maximum value), a beat frequency at that time. Alternatively, the analysis unit 2042' may calculate, based on an interval between a peak time of a certain local maximum value (or local minimum value) of the test beat signal and a peak time of a local maximum value (or local minimum value) after a plurality of cycles, a beat frequency at that time. The analysis unit 2042' measures the beat frequency at each of a plurality of times (multiple timings) during the gradual increase period or the gradual decrease period.
Note that, in the example shown in FIG. 37, the analysis unit 2042' alternately repeats the calculation of the beat frequency based on the peak times of two local maximum values and the calculation of the beat frequency based on the peak times of two local minimum values every half cycle. This makes it possible to determine the beat frequency every half cycle of the test beat signal, determining the beat frequency with high temporal resolution. Additionally, this makes it possible to determine the beat frequency (refer to the black round mark in FIG. 35) at a predetermined time with high accuracy.
FIG. 35 is a graph showing a time variation of the beat frequency of the test beat signal. The horizontal axis indicates time, and the vertical axis indicates beat frequency $f_B$. Note that in the following description, the beat frequency of the test beat signal at a predetermined time (time) $t_i$ may be denoted as $f_B(t_i)$. Note that time $t_i$ (i=0, 1, 2, 3, $\cdots$) indicates time (timing) for each predetermined time. Time $t_0$ is a reference time (e.g., a start time of the gradual increase period), and the predetermined time $t_i$ is determined in order of $t_1$, $t_2$, $t_3$, $\cdots$ for each predetermined time from the reference time.
The black round mark on the graph in the drawing indicates the beat frequency determined by the analysis unit 2042'. As shown in the drawing, the analysis unit 2042' determines the beat frequencies $f_B(t_1)$, $f_B(t_2)$, $f_B(t_3)\cdots$ of the test beat signal for each predetermined time $\Delta t$, respectively. Note that due to the delay in response of the laser light source 2013, the beat frequency of the test beat signal is not a constant value.
The predetermined time $\Delta t$ shown in FIG. 35 corresponds to the predetermined time difference ($\Delta t$) provided between the first test light and the second test light due to the difference in optical path length between the first optical waveguide 2026' and the second optical waveguide 2027' shown in FIG. 32. That is, the analysis unit 2042' determines the beat frequency of the test beat signal for each predetermined time difference ($\Delta t$) between the first test light and the second test light.

<As for S2105>

Then, the analysis unit 2042' determines a time variation of the test light based on the beat frequency (test beat frequency) for each predetermined time of the test beat signal (S2105).

FIG. 36 illustrates a method for determining a time variation of test light. The horizontal axis indicates time, and the vertical axis indicates frequency f. Note that in the following description, the frequency of the test light at a time (time) $t_i$ may be denoted as $f(t_i)$. The solid line graph in the drawing shows a time variation of the frequency of the test light (first test light). The dotted line graph in the drawing shows a time variation of the frequency of the second test light.

First, the analysis unit 2042' determines a frequency of the test light for each predetermined time. Here, the analysis unit 2042' determines the frequency $f(t_i)$ of the test light at a time $t_i$ corresponding to the black round mark on the graph in the drawing, respectively.

As described above, the predetermined time difference ($\Delta t$) is provided between the solid line graph and the dotted line graph in the drawing due to the difference in optical path length between the first optical waveguide 2026' and the second optical waveguide 2027' shown in FIG. 32. In addition, as described above, in S2104, the analysis unit 2042' determines the beat frequencies $f_B(t_1)$, $f_B(t_2)$, $f_B(t_3) \cdots$ of the test beat signal for each predetermined time $\Delta t$, respectively. As shown in FIG. 36, the frequency $f(t_i)$ of the test light at a certain time $t_i$ is equivalent to a value obtained by adding the frequency $f(t_{i-1})$ of the test light at a time $t_{i-1}$ before a predetermined time and the beat frequency $f_B(t_i)$ ($f(t_i) = f(t_{i-1}) + f_B(t_i)$). In this way, the analysis unit 2042' determines the frequency $f(t_i)$ of the test light for each predetermined time based on the beat frequency $f_B(t_i)$ for each predetermined time of the test beat signal obtained in S2104.

Note that, in order to determine the frequency $f(t_i)$ of the test light at a certain time $t_i$, it is necessary to set the frequency $f(t_0)$ of the test light at the reference time $t_0$. However, since the time variation of the frequency of the test light (corresponding to the slope of the solid line graph in FIG. 36) is ultimately used, the frequency $f(t_0)$ of the test light at the reference time t0 is allowed to be set to any value.

Next, the analysis unit 2042' determines the time variation of frequency of the test light based on the frequency $f(t_i)$ of the test light for each predetermined time. Here, the analysis unit 2042' determines the time variation of the frequency of the test light corresponding to the solid line graph in the drawing based on the frequency $f(t_i)$ of the test light for each predetermined time shown with the black round mark on the graph in FIG. 36. For example, the analysis unit 2042' may determine the time variation of the frequency of the test light corresponding to the solid line graph in the drawing by performing interpolation processing on the frequency $f(t_i)$ of the test light for each predetermined time shown with the black round mark on the graph in the drawing. With this, the time variation of the frequency of the test light corresponding to each time is determined. Note that the time variation of the frequency is the ratio of the amount of change in frequency to the amount of change in time, and corresponds to the slope of the solid line graph in FIG. 36. In the following description, the value indicating the time variation of the frequency of the test light (slope of the solid line graph in FIG. 36) may be expressed as $\alpha'$.

FIG. 38 illustrates a relation between the test current and the frequency of the test light. The horizontal axis in the drawing indicates time. The vertical axis on the right side in the drawing indicates current, and the vertical axis on the left side in the drawing indicates frequency. The dotted line graph in FIG. 38 shows the time variation of the current signal (test current) input to the laser light source 2013' in S2101 (refer to the vertical axis on the right side), and the time variation of the frequency of the ideal frequency-modulated light (target frequency of the measurement light) (refer to the vertical axis on the left side). The solid line graph in FIG. 38 shows the time variation of the frequency of the test light (refer to the vertical axis on the left side; refer also to FIGS. 36 and 43). That is, the solid line graph in FIG. 38 shows the time variation of the frequency of the test light determined by the analysis unit 2042' in S2105. In the dotted line graph in FIG. 38, the current or frequency increases linearly over time. In the solid line graph in FIG. 38, the frequency increases non-linearly over time due to the effect of the delay in response of the laser light source. In this way, the time variation of the frequency of the test light deviates from the time variation of the ideal frequency (the time variation of the target frequency of the measurement light).

<As for S2106>

Next, the analysis unit 2042' generates waveform data based on the time variation of the frequency of the test light. The waveform data is data (current profile data) representing a waveform of the current (corrected current) input to the laser light source 2013, and is, for example, data for generating the corrected current shown in the left drawing of FIG. 31. Below, a method for generating the waveform data (current profile data) will be described.

The analysis unit 2042' divides the gradual increase period (or gradual decrease period) into a plurality of unit times ($\Delta t_j$), and determines the corrected current for each unit time. The corrected current for each unit time indicates a part of waveform data (waveform data fragment). Then, the analysis unit 2042' generates waveform data representing a waveform of the corrected current by connecting the corrected currents (waveform data fragments) calculated for each unit time to each other in time order. Here, the generation of the corrected currents (waveform data fragments) at times $t_A$ and $t_B$ in FIG. 38 is described.

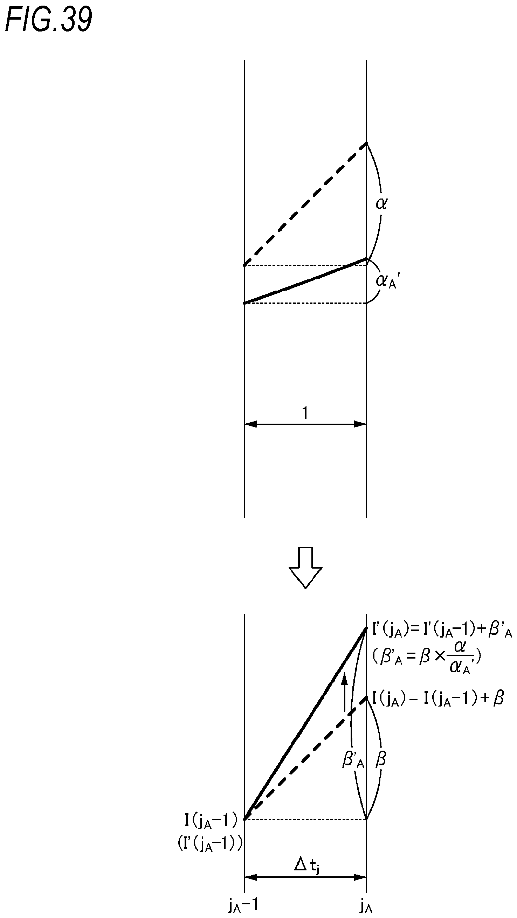

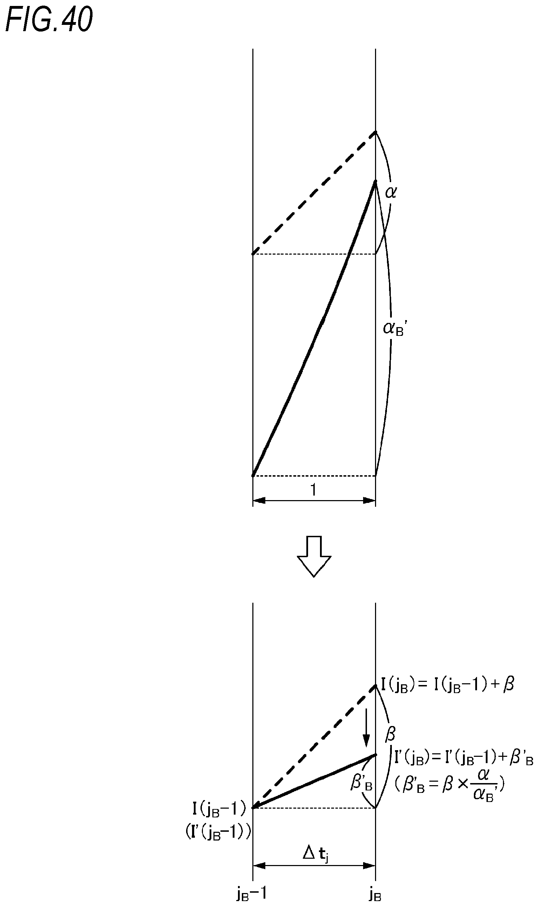

FIGS. 39 and 40 illustrate a generation method of waveform data. In other words, FIGS. 39 and 40 are diagrams showing a method of correcting the current input to the laser light source 2013. FIG. 39 shows a generation method of a corrected current (waveform data fragment) at a time (time) $t_A$ in FIG. 38. FIG. 40 shows a generation method of a corrected current (waveform data fragment) at a time (time) $t_B$ in FIG. 38.

The dotted lines in the upper drawings of FIGS. 39 and 40 indicate the time variation of the frequency of the ideal frequency-modulated light (time variation of the target frequency of the measurement light), and the solid lines indicate the time variation of the frequency of the test light. In the upper drawings of FIGS. 39 and 40, the horizontal axis indicates time, and the vertical axis indicates frequency. $\alpha$ in the drawings indicates the slope of the dotted line, and indicates a value of the time variation of the frequency of the ideal frequency-modulated light (time variation of the target frequency of the measurement light) (the time width in the upper drawings of FIGS. 39 and 40 is 1). Note that the slope $\alpha$ is a known value and is constant regardless of time. $\alpha_A'$ in the drawing indicates the slope of the solid line at a time (time) $t_A$ in FIG. 38. $\alpha_B'$ indicates the slope of the solid line at a time (time) $t_B$ in FIG. 38. Note that, in the following description, the slope of the solid line at an arbitrary time in FIG. 38 may be indicated simply as $\alpha'$ without a subscript. The slope $\alpha'$ is a value corresponding to the time variation of the frequency of the test light (ratio of the amount of change in the frequency of the test light to the amount of change in time), is a value obtained in S2106 described above, and is a value that changes over time. As shown in the upper drawings of FIGS. 39 and 40, it is here assumed that the slope $\alpha_A'$ at a time $t_A$ is smaller than the slope $\alpha$ ($\alpha > \alpha_A'$), and the slope $\alpha_B'$ at a time $t_B$ is greater than the slope $\alpha$ ($\alpha < \alpha_B'$).

The dotted lines in the lower drawings of FIGS. 39 and 40 indicate waveform data (waveform data representing a current signal of a triangular waveform or a test current) before correction. The solid line indicates waveform data after correction (waveform data representing the corrected current). In the lower drawings of FIGS. 39 and 40, the horizontal axis indicates time, and the vertical axis indicates current. The horizontal width in the lower drawings of FIGS. 39 and 40 indicates the unit time $\Delta t$ and corresponds to a time during which the current (current value) input to the laser light source 2013 is updated (the time width in the lower drawings of FIGS. 39 and 40 is not limited to 1). In the following description, the current indicated by the dotted line is denoted as I, and the current indicated by the solid line is denoted as I'. Currents $I(j_A)$ and $I'(j_A)$ in the drawings indicate values of the current at a timing $j_A$ equivalent to the time (time) $t_A$ in FIG. 38. Currents $I(j_B)$ and $I'(j_B)$ in the drawings indicate values of the current at a timing $j_B$ equivalent to the time (time) $t_B$ in FIG. 38. The lower drawings of FIGS. 39 and 40 show an aspect where at the unit time $\Delta t_j$ between a certain timing j-1 and a next timing j, the current indicated by the waveform data varies from I(j-1) to I(j).

In the waveform data before correction (waveform data representing a current signal of a triangular waveform or a test current), as shown in the dotted lines in the lower drawings of FIGS. 39 and 40, the current I(j) at a certain timing j becomes a value increased from the current I(j-1) at a immediately preceding timing j-1 by a predetermined amount of change $\beta$ (I(j) = I(j-1) + $\beta$). Note that the amount of change $\beta$ is a constant value (the amount of change $\beta$ is a positive value during the gradual increase period where the frequency is increased, and the amount of change $\beta$ is a negative value during the gradual decrease period where the frequency is decreased). Then, by repeating the output of the current I(j) increased from the previous current I(j-1) by the amount of change $\beta$ every unit time (in other words, by connecting the waveform data fragments to each other in time order), waveform data representing a current (a current signal of a triangular waveform) that varies linearly over time is derived.

In the present embodiment, the amount of change $\beta$ is corrected based on the time variation (slope $\alpha'$) of the frequency of the test light. Here, it is assumed that the amount of change $\beta'$ after correction is a value obtained by multiplying the amount of change $\beta$ before correction by a reciprocal ($\alpha/\alpha'$) of the ratio of the slope $\alpha'$ to the ideal slope $\alpha$ ($\beta' = \beta \times \alpha/\alpha'$). For this reason, the corrected current I'(j) at a certain timing j becomes a value obtained by increasing the corrected current I'(j-1) at the immediately preceding timing j-1 by a predetermined amount of change $\beta'$ (I'(j) = I'(j-1) + $\beta'$).

For example, at a timing $j_A$ equivalent to a time $t_A$, the amount of change $\beta_A'$ after correction is a value obtained by multiplying the amount of change $\beta$ before correction by $\alpha/\alpha'$ ($\beta_A' = \beta \times \alpha/\alpha_A'$). Since the slope $\alpha_A'$ at a time $t_A$ is smaller than the slope $\alpha$ ($\alpha > \alpha_A'$), the amount of change $\beta_A'$ after correction becomes a larger value than the amount of change $\beta$ before correction. The current I'($j_A$) at a timing $j_A$ equivalent to a time $t_A$ becomes a value obtained by increasing the current I'($j_A$-1) at the immediately preceding timing $j_A$-1 by the amount of change $\beta'$ after correction (I'($j_A$) = I'($j_A$-1) + $\beta'$). The time variation of the current I' after correction at a time $t_A$ (corresponding to the slope of the solid line in the lower drawing of FIG. 39; $\beta_A'/\Delta t_j$) becomes greater compared to the time variation of the current I before correction (corresponding to the slope of the dotted line in the lower drawing of FIG. 39; $\beta/\Delta t_j$).

In addition, at a timing $j_B$ equivalent to a time $t_B$, the amount of change $\beta_B'$ after correction is a value obtained by multiplying the amount of change $\beta$ before correction by $\alpha/\alpha_B'$ ($\beta_B' = \beta \times \alpha/\alpha_B'$). Since the slope $\alpha_B'$ at a time $t_B$ is greater than the slope $\alpha$ ($\alpha < \alpha_B'$), the amount of change $\beta_B'$ after correction becomes a smaller value than the amount of change $\beta$ before correction. The current I'($j_B$) at a timing $j_B$ equivalent to a time $t_B$ becomes a value obtained by increasing the current I'($j_B$-1) at the immediately preceding timing $j_B$-1 by the amount of change $\beta'$ after correction (I'($j_B$) = I'($j_B$-1) + $\beta_B'$). The time variation of the current I' after correction at a time $t_B$ (corresponding to the slope of the solid line in the lower drawing of FIG. 40; $\beta_B'/\Delta t_j$) becomes smaller compared to the time variation of the current I before correction (corresponding to the slope of the dotted line in the lower drawing of FIG. 40; $\beta/\Delta t_j$).

In this way, when the time variation (slope $\alpha$') of the frequency of the test light at a certain time is smaller than the ideal time variation (slope $\alpha$), the current represented by the waveform data is corrected such that the time variation of the current at that time ($\beta$'/$\Delta t_j$) becomes greater. Conversely, when the time variation (slope $\alpha$') of the frequency of the test light at a certain time is greater than the ideal time variation (slope $\alpha$), the current represented by the waveform data is corrected such that the time variation of the current at that time ($\beta$'/$\Delta t_j$) becomes smaller. Thereby, a corrected current (waveform data fragment) is generated at each unit time so that the time variation of the frequency of the frequency-modulated light output from the laser light source 2013 at that time approaches the ideal time variation.

As described above, the analysis unit 2042' divides the gradual increase period (or gradual decrease period) into a plurality of unit times $\Delta t_j$, and calculates the corrected current I'(j) corresponding to the waveform data fragment for each unit time $\Delta t_j$. The analysis unit 2042' generates waveform data representing the waveform of the corrected current by connecting the corrected currents (waveform data fragments) calculated for each unit time to each other in time order. Note that since the slope $\alpha$' is a value varying over time, the slope of the corrected current of the waveform data fragment (slope of the solid line in the lower drawings of FIGS. 39 and 40) becomes different for each unit time. For this reason, the waveform data in which the waveform data fragments are connected to each other becomes data representing the corrected current I' that varies non-linearly over time. Specifically, waveform data as shown in the left drawing of FIG. 31 is generated through the processing in S2106.

Note that after the analysis unit 2042' generates the waveform data, the output unit 2043' outputs the waveform data to the correction unit 2012A of the measurement apparatus 2001 (refer to FIG. 29) and causes the correction unit 2012A to store the waveform data (correction data) (S2106).

<As for S2107>

The correction unit 2012A of the measurement apparatus 2001 (refer to FIG. 29) outputs a current signal (corrected current) corresponding to the waveform data (current profile data) to the current source 2012. In other words, the current source 2012 generates a current signal (corrected current) in accordance with the waveform data (current profile data) stored in the correction unit 2012A and inputs the same to the laser light source 2013 (S2107). The corrected current input to the laser light source 2013 varies in the amount of change $\beta$' for each unit time $\Delta t_j$ over time. As a result, as shown in the left drawing of FIG. 31, the corrected current varies non-linearly over time.

The laser light source 2013 outputs measurement light (frequency-modulated light) with a frequency corresponding to the input corrected current (S2107). As described above, in the laser light source 2013, there is a delay in response after the input current varies until the frequency of the laser light varies. However, the current for each unit time $\Delta t_j$ is corrected so that the time variation of the frequency of the measurement light output from the laser light source 2013 approaches the time variation of the target frequency. For example, at a time $t_A$, the time variation of the input current to the laser light source 2013 is corrected to be large, so the effect of the delay in response of the laser light source 2013 is canceled out, and the time variation of the frequency of the measurement light output from the laser light source 2013 comes closer to the time variation of the target frequency. In addition, at a time $t_B$, the time variation of the input current to the laser light source 2013 is corrected to be small, so the effect of the delay in response of the laser light source 2013 is canceled out, and the time variation of the frequency of the measurement light output from the laser light source 2013 comes closer to the time variation of the target frequency. For this reason, the laser light source 2013 can output the measurement light whose frequency increases or decreases linearly over time.

As described above, the optical device 2020 irradiates the frequency-modulated light (measurement light) to the target object 2090 and causes the reflected light from the target object 2090 and the reference light (measurement light) to interfere with each other to generate the interference light. The detection device 2030 detects the interference light between the reflected light and the reference light and outputs a beat signal. The analysis unit 2042 of the signal processing device 2040 performs frequency analysis (fast Fourier transform (FFT)) on the beat signal. As shown in the right drawing of FIG. 31, when frequency analysis (FFT analysis) is performed on the beat signal, a peak in intensity appears at a specific frequency, so the analysis unit 2042 can determine the beat frequency $f_B$ of the beat signal. The analysis unit 2042 calculates the distance R to the target object 2090 using Formulas (2) and (3) described above, based on the beat frequency $f_B$ of the beat signal (S2107). In this way, according to the present embodiment, even when the laser light source 2013 with a delay in response is used, the distance can be measured by the FMCW method.

Since the characteristics of the laser light source 2013 (especially the laser element) vary with temperature, the delay in response of the laser light source 2013 also varies with temperature. For this reason, the delay in response of the laser light source 2013 varies with temperature.

Therefore, preferably, the correction data obtaining apparatus 2001' performs the processing of S2101 to S2106 described above under different temperature environments, respectively, obtains correction data (e.g., waveform data) for each of a plurality of temperatures, respectively, and stores the correction data associated with the temperature in the correction unit 2012A. When performing the processing of S2107 described above, the correction unit 2012A preferably generates the current signal (corrected current) based on the correction data corresponding to the temperature detected by the temperature sensor and inputs the same to the laser light source 2013. This makes it possible to increase measurement accuracy of the distance.

In this case, the correction unit 2012A may use the temperature detected by the temperature sensor 2014A provided in the temperature regulator 2014. This allows the temperature sensor 2014A to be used concurrently. However, the correction unit 2012A may use a temperature detected by a temperature sensor different from the temperature sensor 2014A of the temperature regulator 2014 to correct the current signal (corrected current) based on correction data corresponding to the temperature.

<Variation 3>

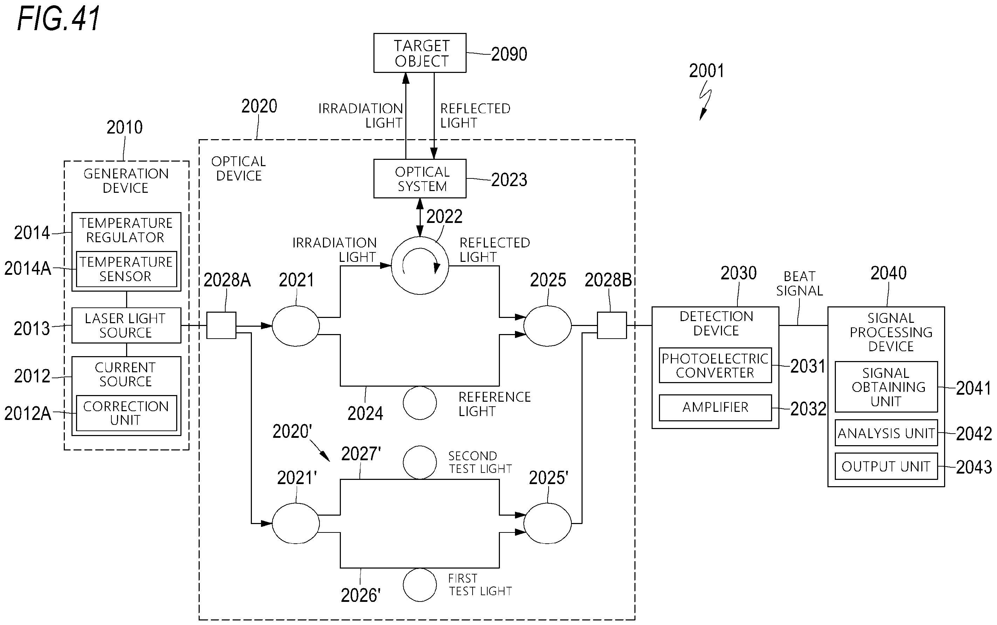

FIG. 41 illustrates a measurement apparatus 2001 of a variation. In the variation, some components of the measurement apparatus 2001 are used as the correction data obtaining apparatus 2001'.

The optical device 2020 of the measurement apparatus 2001 of the variation includes an optical device 2020' for test and optical switches 2028A and 2028B. The optical switch 2028A switches a connection destination of the laser light source 2013 to the divider 2021 or the divider 2021'. An input port of the optical switch 2028A is connected to the laser light source 2013, one output port of the two output ports of the optical switch 2028A is connected to the divider 2021, and the other output port is connected to the divider 2021'. The optical switch 2028B switches a connection source of the detection device 2030 to the combiner 2025 or the combiner 2025'. One input port of two input ports of the optical switch 2028B is connected to the combiner 2025, the other input port is connected to the combiner 2025', and an output port is connected to the detection device 2030.

The processing of S2101 in FIG. 33 is performed by the generation device 2010 of the measurement apparatus 2001, the processing of S2102 is performed by the optical device 2020' for test, the processing of S2103 is performed by the detection device 2030 of the measurement apparatus 2001, and the processing of S2104 to S2106 is performed by the signal processing device 2040 of the measurement apparatus 2001. Note that when performing the processing of S2101 to S2103, the optical switch 2028A connects the laser light source 2013 and the branch 2021' each other, and the optical switch 2028B connects the combiner 2025' and the detection device 2030 each other. With this, the test light is divided into the first test light and the second test light, a predetermined time difference is provided between the first test light and the second test light, and the first test light and the second test light are caused to interfere with each other to generate test interference light. Additionally, the test interference light can be detected by the detection device 2030 to generate a beat signal (test beat signal) of the test interference light. When performing the processing of S2107, the optical switch 2028A connects the laser light source 2013 and the divider 2021 each other, and the optical switch 2028B connects the combiner 2025 and the detection device 2030 each other.

< Variation 4>

In the above description, the analysis unit 2042' (or the analysis unit 2042) determines the time variation of the frequency of the test light based on the beat frequency for each predetermined time of the test beat signal (S2105), generates the waveform data representing the waveform of the corrected current based on the time variation of the frequency of the test light (S2106; refer to the lower drawings of FIGS. 39 and 40), and stores the waveform data in the correction unit 2012A as the correction data. However, the correction data is not limited to the waveform data (current profile data) representing the waveform of the corrected current. For example, data representing the time variation (slope $\alpha'$) of the frequency of the test light may be stored in the correction unit 2012A as the correction data, or the reciprocal ($1/\alpha'$) of the time variation of the frequency of the test light may be stored in the correction unit 2012A as the correction data. In this case, the correction unit 2012A generates waveform data representing the waveform of the corrected current based on the correction data (refer to the lower drawings of FIGS. 39 and 40), and the current source 2012 outputs a current signal (corrected current) corresponding to the waveform data determined by the correction unit 2012A. In this way, some of the processing of S2101 to S2106 (in this case, S2106) may be performed by the measurement apparatus 2001 (for example, the correction unit 2012A). Note that, in this case, the correction unit 2012A needs to be provided with not only a memory for storing the correction data but also an arithmetic processing device (e.g., a CPU, an MPU, or the like) for generating the waveform data. Even with this configuration, the laser light source 2013 can output the measurement light whose frequency varies linearly over time.

In addition, in the above description, the waveform data representing the waveform of the corrected current is determined in advance, and the current source 2012 outputs the corrected current in accordance with the waveform data. However, the corrected current may be generated without determining the waveform data in advance. Specifically, the current source 2012 may output the corrected current while calculating the corrected current I' as shown in the lower drawings of FIGS. 39 and 40. However, when outputting the corrected current while calculating the corrected current I', high-speed arithmetic is required. In contrast, when the waveform data is determined in advance and the current source 2012 outputs a corrected current in accordance with the waveform data, it is advantageous because high-speed arithmetic is unnecessary.

=== Sub-conclusion ===

The above measurement method performs inputting the test current varying linearly over time as shown in FIG. 34 to the light source 2013' (laser light source 2013 in the variation) and outputting test light frequency-modulated in response to the test current from the light source 2013' (S2101); dividing the test light into the first test light and the second test light, providing the predetermined time difference $\Delta t$ between the first test light and the second test light, and causing the first test light and the second test light to interfere with each other to generate the test interference light (S2102); causing the detection device 2030' (detection device 2030 in the variation) to detect the test interference light and output the test beat signal (S2103); determining the beat frequency for each time of the test beat signal (S2104; refer to FIG. 35); determining the time variation of the frequency of the test light based on the beat frequency for each time of the test beat signal (S2105); and outputting the corrected current corrected based on the time variation of the frequency of the test light to the light source 2013 (S2106, S2107). As the corrected current corrected in this way is output to the laser light source 2013, the measurement light (frequency-modulated light) output by the laser light source 2013 in response to the corrected current varies linearly over time. This makes it possible to measure the distance by the FMCW method using the laser light source 2013 with a delay in response. That is, it becomes to possible to irradiate the measurement light output from the laser light source 2013 in response to the corrected current to the target object 2090 and to cause the reflected light from the target object 2090 and the measurement light to interfere with each other to generate interference light; to cause the detection device 2030 to detect the interference light and output the beat signal; and to determine the distance to the target object 2090 based on the beat frequency of the beat signal (peak frequency shown in FIG. 31).

In addition, in the above measurement method, in the processing of S2104, the beat frequency of the test beat signal is determined for each predetermined time difference $\Delta t$ provided between the first test light and the second test light (refer to FIG. 35). Thereby, in the processing of S2105, it becomes possible to determine the time variation of the frequency of the test light based on the test beat frequency for each predetermined time (refer to FIG. 36).

In addition, in the above measurement method, as shown in FIG. 37, the peak time at which the beat signal peaks is determined, and the beat frequency is determined based on the interval of the peak times. This makes it possible to determine the time variation of the beat frequency during a predetermined time. Note that the measurement method of the beat frequency is not limited thereto. For example, a time at which the beat signal becomes a predetermined voltage (e.g., 0 V) may be determined, and the beat frequency may be determined based on an interval of the times at which the beat signal becomes a predetermined voltage (e.g., a center voltage (average voltage) of the beat signal).

In addition, in the above measurement method, as shown in FIG. 37, the peak time at which the beat signal becomes a local maximum value and the peak time at which the beat signal becomes a local minimum value are respectively determined, and the beat frequency is determined every half cycle of the beat signal based on the interval of the peak times. This makes it possible to determine the beat frequency with high temporal resolution.

In addition, in the above measurement method, as shown in the lower drawings of FIGS. 39 and 40, the corrected current I' is generated based on the ratio ($\alpha'/\alpha$) of the time variation (slope $\alpha'$) of the frequency of the test light to the time variation (slope $\alpha$) of the target frequency of the measurement light. This makes it possible to cancel out the effect of the delay in response of the laser light source 2013 and to correct the current input to the laser light source 2013 so that the time variation of the frequency of the measurement light output from the laser light source 2013 approaches the time variation of the target frequency. Note that, in the above description, the corrected current I'(j) is generated based on the amount of change $\beta'$ (= $\beta \times \alpha/\alpha'$) calculated by multiplying the reciprocal ($\alpha/\alpha'$) of the ratio of the time variation of the frequency of the test light to the time variation of the target frequency of the measurement light and the amount of change $\beta$, but the generation method of the corrected current is not limited thereto. For example, the amount of change $\beta'$ (= $\beta \times C \times \alpha/\alpha'$) may be calculated by multiplying the reciprocal ($\alpha/\alpha'$) of the ratio of the time variation of the frequency of the test light to the time variation of the target frequency of the measurement light by a predetermined coefficient C.

The measurement apparatus 2001 includes the laser light source 2013, the optical device 2020, the detection device 2030, the signal processing device 2040, and the current source 2012. The laser light source 2013 outputs light with a frequency corresponding to the input current, and outputs light frequency-modulated in response to a current signal in which current varies over time. However, there is a delay in response after the input current varies until the frequency of the laser light varies. For this reason, when a current signal in which current varies linearly over time is input to the laser light source 2013, the beat frequency $f_B$ of the beat signal varies over time (refer to FIG. 43), and as a result, it is difficult to determine the beat frequency $f_B$ by frequency analysis on the beat signal (refer to the drawing on the right side in FIG. 30), resulting in making it difficult to measure the distance by the FMCW method. Therefore, the current source 2012 of the present embodiment inputs, to the laser light source 2013, the corrected current (current signal; refer to FIG. 31) corrected based on the time variation of the frequency of the light (refer to solid line in FIG. 36) at the time when the current signal (refer to FIG. 34) in which current varies linearly over time is input to the laser light source 2013. Thereby, the measurement light (frequency-modulated light) output by the laser light source 2013 in response to the corrected current varies linearly over time, making it possible to measure the distance by the FMCW method.

Although the embodiments of the present disclosure have been described in detail, the present disclosure is not limited to the above embodiments and includes various variations. In addition, the above embodiments have been described in detail regarding the configurations so as to easily understand the present disclosure, and are not necessarily limited to having all the described configurations. In addition, it is possible to add, delete, or replace some of the configurations of the above-described embodiments with other configurations.

The subject application is based on Japanese Patent Application Nos. 2022-040509 filed on March 15, 2022, 2022-040510 filed on March 15, 2022, and 2022-040511 filed on March 15, 2022, all of which are incorporated herein by reference.

**Claims**

1. A measurement apparatus comprising:

   a generation device configured to generate frequency-modulated light;
   an optical device configured to irradiate the light to a target object and cause reflected light from the target object and reference light to interfere with each other;
   a detection device configured to detect an interference wave between the reflected light and the reference light and output a beat signal; and
   a signal processing device configured to determine a distance to the target object based on a time variation of a beat frequency of the beat signal.

2. The measurement apparatus according to claim 1, wherein the signal processing device is configured to determine the beat frequency at each of a plurality of times during a period in which a frequency of the light increases or decreases, and to determine the time variation based on the plurality of determined beat frequencies.

3. The measurement apparatus according to claim 2, wherein signal processing device is configured:

   to determine a peak time at which the beat signal peaks, and
   to determine the beat frequency based on an interval of the peak times.

4. The measurement apparatus according to claim 3, wherein the signal processing device is configured:

   to determine a peak time at which the beat signal becomes a local maximum value and a peak time at which the beat signal becomes a local minimum value, respectively, and
   to determine the beat frequency every half cycle of the beat signal based on an interval of the peak times.

5. The measurement apparatus according to any one of claims 1 to 4, wherein the signal processing device is configured to determine the beat frequency at each of a plurality of times during a period in which a frequency of the light increases or decreases, and to determine a relative speed of the target object based on a magnitude of the plurality of determined beat frequencies.

6. The measurement apparatus according to any one of claims 1 to 5, wherein signal processing device is configured:

   to store in advance a table in which the time variation and the distance are associated with each other, and
   to determine the time variation of the beat frequency based on the beat signal output from the detection device and determine the distance by referring to the table.

7. The measurement apparatus according to claim 6, further comprising a temperature sensor configured to detect a temperature,

   wherein a temperature, the time variation, and the distance are associated with one another in the table, and
   wherein the signal processing device is configured to determine the distance by referring to the table based on the temperature detected by the temperature sensor and the time variation.

8. The measurement apparatus according to any one of claims 1 to 7, further comprising a temperature sensor configured to detect a temperature,

wherein the signal processing device is configured to determine the distance based on the temperature detected by the temperature sensor and the time variation.

9. The measurement apparatus according to claim 8, wherein the temperature sensor is configured to detect a temperature of the generation device.

10. A measurement method comprising:

generating frequency-modulated light;
irradiating the light to a target object and causing reflected light from the target object and reference light to interfere with each other;
detecting an interference wave between the reflected light and the reflected light by a detection device and outputting a beat signal from the detection device; and
determining a distance to the target object based on a time variation of a beat frequency of the beat signal.

11. A measurement apparatus comprising:

a generation device configured to generate measurement light frequency-modulated to repeat a gradual increase period during which a frequency increases, a gradual decrease period during which a frequency decreases, and a constant period during which a frequency is constant in a predetermined order;
an optical device configured to irradiate the measurement light to a target object and cause reflected light from the target object and the measurement light to interfere with each other;
a detection device configured to detect an interference wave between the reflected light and the measurement light and output a beat signal; and
a signal processing device configured to determine a distance to the target object based on a first frequency indicating a beat frequency of the beat signal during the gradual increase period, a second frequency indicating a beat frequency of the beat signal during the gradual decrease period, and a third frequency indicating a beat frequency of the beat signal during the constant period.

12. The measurement apparatus according to claim 11, wherein signal processing device is configured:

to determine a magnitude relation between a frequency of the measurement light and a frequency of the reflected light based on the first frequency, the second frequency, and the third frequency, and
to determine the distance based on the first frequency and the second frequency by using a function corresponding to the magnitude relation.

13. The measurement apparatus according to claim 12, wherein the signal processing device is configured:

to determine the distance based on the first frequency and the second frequency using a predetermined function when the frequency of the reflected light during the gradual increase period is lower than the frequency of the measurement light and the frequency of the reflected light during the gradual decrease period is higher than the frequency of the measurement light, and
to determine the distance based on the first frequency and the second frequency using a function different from the predetermined function when the frequency of the reflected light during the gradual increase period is higher than the frequency of the measurement light, or when the frequency of the reflected light during the gradual decrease period is lower than the frequency of the measurement light.

14. The measurement apparatus according to any one of claims 11 to 13, wherein a period comprising the gradual increase period, the gradual decrease period, and the constant period is repeated with a predetermined cycle, and wherein the signal processing device is configured to repeat determining the distance based on the first frequency, the second frequency, and the third frequency with a cycle shorter than the predetermined cycle.

15. The measurement apparatus according to claim 14, wherein the signal processing device is configured, respectively:

to determine the distance based on the first frequency, the second frequency, and the third frequency during the period in which the constant period follows the gradual increase period and the gradual decrease period;
to determine the distance based on the first frequency, the second frequency, and the third frequency during the period in which the constant period is between the gradual increase period and the gradual decrease period; and,

to determine the distance based on the first frequency, the second frequency, and the third frequency during the period in which the constant period precedes the gradual increase period and the gradual decrease period.

16. A measurement method comprising:

inputting a test current varying linearly over time to a light source;
outputting test light frequency-modulated in response to the test current from the light source;
dividing the test light into first test light and second test light, providing a predetermined time difference between the first test light and the second test light, and causing the first test light and the second test light to interfere with each other to generate test interference light;
causing a detection device to detect the test interference light and output a test beat signal;
determining a beat frequency for each time of the test beat signal;
determining a time variation of a frequency of the test light based on the beat frequency for each time of the test beat signal;
outputting a corrected current corrected based on the time variation of the frequency of the test light;
outputting measurement light frequency-modulated in response to the corrected current from the light source;
irradiating the measurement light to a target object and causing reflected light from the target object and the measurement light to interfere with each other to generate interference light;
causing the detection device to detect the interference light and output a beat signal; and
determining a distance to the target object based on the beat frequency of the beat signal.

17. The measurement method according to claim 16, wherein the beat frequency of the test beat signal is determined for each predetermined time difference between the first test light and the second test light.

18. The measurement method according to claim 17, further comprising:

determining a peak time at which the test beat signal peaks, and
determining the beat frequency of the test beat signal based on an interval of the peak times.

19. The measurement method according to claim 18, further comprising:

determining a peak time at which the test beat signal becomes a local maximum value and a peak time at which the beat signal becomes a local minimum value, respectively, and
determining the beat frequency every half cycle of the beat signal based on an interval of the peak times.

20. The measurement method according to any one of claims 16 to 19, wherein the corrected current is generated based on a ratio of a time variation of a frequency of the test light to a time variation of a target frequency of the measurement light.

21. A measurement apparatus comprising:

a light source configured to output a light frequency-modulated in response to an input current signal;
an optical device configured to irradiate the light to a target object and cause reflected light from the target object and reference light to interfere with each other;
a detection device configured to detect an interference wave between the reflected light and the reference light and output a beat signal;
a signal processing device configured to determine a distance to the target object based on a time variation of a beat frequency of the beat signal; and
a current source configured to input, to the light source, the current signal corrected based on a time variation of the frequency of the light at the time when the current signal in which current varies linearly over time is input to the light source.

FIG.1

## FIG.2

WHEN DISTANCE TO TARGET OBJECT IS SHORT

—— MEASUREMENT VALUE
- - - - REFLECTED LIGHT

FREQUENCY

$f_{B3}$

$f_{B2}$

$f_{B1}$

TIME

## FIG.3

WHEN DISTANCE TO TARGET OBJECT IS LONG

—— MEASUREMENT VALUE
- - - - REFLECTED LIGHT

FREQUENCY

$f_{B3}$

$f_{B2}$

$f_{B1}$

TIME

*FIG.4*

*FIG.5*

*FIG.6*

| S101 | MEASURE BEAT FREQUENCY FOR EACH TIME |
| S102 | CALCULATE TIME VARIATION OF BEAT FREQUENCY |
| S103 | DERIVE DISTANCE TO TARGET OBJECT BASED ON TIME VARIATION OF BEAT FREQUENCY |

*FIG.7*

*FIG.8*

| SLOPE A | DISTANCE R |
|---------|------------|
| $A_1$ | $R_1$ |
| $A_2$ | $R_2$ |
| $A_3$ | $R_3$ |
| $A_4$ | $R_4$ |
| $A_5$ | $R_5$ |
| $A_6$ | $R_6$ |
| $A_7$ | $R_7$ |
| $A_8$ | $R_8$ |
| $A_9$ | $R_9$ |

*FIG.9*

| SLOPE A | REFERENCE INTERCEPT $B_0$ |
|---------|---------------------------|
| $A_1$ | $B_{01}$ |
| $A_2$ | $B_{02}$ |
| $A_3$ | $B_{03}$ |
| $A_4$ | $B_{04}$ |
| $A_5$ | $B_{05}$ |
| $A_6$ | $B_{06}$ |
| $A_7$ | $B_{07}$ |
| $A_8$ | $B_{08}$ |
| $A_9$ | $B_{09}$ |

## FIG.10

BEAT FREQUENCY

WHEN TARGET OBJECT
IS STATIONARY
$f_B = A \cdot t + B_0$

WHEN TARGET OBJECT
IS MOVING
$f_B = A \cdot t + B$

$f_B$

$f_{dop}$

$B_0$

$B$

$0$

TIME $t$

## FIG.11

T      T

TIME

*FIG.12*

*FIG.13*

## FIG.14

*FIG.15*

FIG.16

*FIG.17*

*FIG.18*

# FIG.19

FIG.20

FIG.21

FIG.22

S1001
$$f_{up} \leq f_{dn}\ ?$$
YES — NO

S1002
$$\left|\,|f_{up}+f_c|-|f_{dn}-f_c|\,\right|$$
$$> \left|\,|f_{up}-f_c|-|f_{dn}-f_c|\,\right|$$
且つ
$$\left|\,|f_{up}-f_c|-|f_{dn}-f_c|\,\right|$$
$$< \alpha$$
NO
YES

S1004
$$\left|\,|f_{up}-f_c|-|f_{dn}+f_c|\,\right|$$
$$\leq \left|\,|f_{up}-f_c|-|f_{dn}-f_c|\,\right|$$
且つ
$$\left|\,|f_{up}-f_c|-|f_{dn}+f_c|\,\right|$$
$$< \alpha$$
NO
YES

S1003
$$\left|\,|f_{up}+f_c|-|f_{dn}-f_c|\,\right|$$
$$\leq \left|\,|f_{up}-f_c|-|f_{dn}-f_c|\,\right|$$
且つ
$$\left|\,|f_{up}+f_c|-|f_{dn}-f_c|\,\right|$$
$$< \alpha$$
YES
NO

S1005
$$\left|\,|f_{up}-f_c|-|f_{dn}+f_c|\,\right|$$
$$> \left|\,|f_{up}-f_c|-|f_{dn}-f_c|\,\right|$$
且つ
$$\left|\,|f_{up}-f_c|-|f_{dn}-f_c|\,\right|$$
$$< \alpha$$
YES
NO

S1015
ERROR

S1016
ERROR

S1011
(PATTERN A)
$$f_B = \frac{-f_{up}+f_{dn}}{2}$$

S1012
(PATTERN B)
$$f_B = \frac{f_{up}+f_{dn}}{2}$$

S1013
(PATTERN C)
$$f_B = \frac{f_{up}+f_{dn}}{2}$$

S1014
(PATTERN D)
$$f_B = \frac{f_{up}-f_{dn}}{2}$$

*FIG. 23*

EP 4 495 629 A1

FIG.24

EP 4 495 629 A1

*FIG.25*

FREQUENCY

GRADUAL INCREASE PERIOD | GRADUAL DECREASE PERIOD | CONSTANT PERIOD | GRADUAL INCREASE PERIOD | GRADUAL DECREASE PERIOD | CONSTANT PERIOD

TIME

$f_{up}$ $f_{dn}$ $f_c$ $f_{up}$ $f_{dn}$ $f_c$

T0 T

T1 ⇨ $f_B$ , $f_{dop}$
T2 ⇨ $f_B$ , $f_{dop}$
T3 ⇨ $f_B$ , $f_{dop}$
T4 ⇨ $f_B$ , $f_{dop}$

⇨ $f_B$ , $f_{dop}$

FIG.26

S1101 — $f_{up} \leq f_{dn}$ ?

YES / NO

S1102 — $f_{dn} \leq 2 \times f_c$ ?

YES / NO

S1103 — $f_{up} \leq 2 \times f_c$ ?

NO / YES

S1011
(PATTERN A)
$$f_B = \frac{-f_{up} + f_{dn}}{2}$$

S1012
(PATTERN B)
$$f_B = \frac{f_{up} + f_{dn}}{2}$$

S1013
(PATTERN C)
$$f_B = \frac{f_{up} + f_{dn}}{2}$$

S1014
(PATTERN D)
$$f_B = \frac{f_{up} - f_{dn}}{2}$$

FIG.27

FIG.28

# FIG.29

FIG.30

CURRENT

TIME

INTENSITY

FREQUENCY

FIG.31

CURRENT

TIME

INTENSITY

FREQUENCY

# FIG.32

## FIG.33

S2101 — INPUT CURRENT SIGNAL (TEST CURRENT) OF TRIANGULAR WAVEFORM TO LIGHT SOURCE, AND OUTPUT TEST LIGHT FROM LIGHT SOURCE.

S2102 — CAUSING DIVIDED LIGHTS TO INTERFERE WITH EACH OTHER TO GENERATE TEST INTERFERENCE LIGHT WHILE PROVIDING PREDETERMINED TIME DIFFERENCE BETWEEN DIVIDED LIGHTS OF TEST LIGHT

S2103 — GENERATE BEAT SIGNAL (TEST BEAT SIGNAL) OF TEST INTERFERENCE LIGHT

S2104 — DETERMINE BEAT FREQUENCY (TEST BEAT FREQUENCY) OF TEST BEAT SIGNAL FOR EACH TIME

S2105 — DETERMINE TIME VARIATION OF FREQUENCY OF TEST LIGHT BASED ON TEST BEAT FREQUENCY FOR EACH PREDETERMINED TIME

S2106 — GENERATE WAVEFORM DATA BASED ON TIME VARIATION OF FREQUENCY OF TEST LIGHT

S2107 — INPUT CURRENT SIGNAL (CORRECTED CURRENT) CORRESPONDING TO WAVEFORM DATA TO LIGHT SOURCE, OUTPUT MEASUREMENT LIGHT FROM LIGHT SOURCE, AND DETERMINE DISTANCE TO TARGET OBJECT

*FIG.34*

CURRENT

$t_0$    $t_1$    $t_2$    $t_3$    TIME $t$

*FIG.35*

$f_B(t)$

$f_B(t_3)$
$f_B(t_2)$
$f_B(t_1)$

$\Delta t$    $\Delta t$

$t_1$    $t_2$    $t_3$    TIME $t$

*FIG.36*

$f(t)$        $f(t_i) = f(t_i-1) + f_B(t_i)$

——— TEST LIGHT
(FIRST TEST LIGHT)

- - - - (SECOND TEST LIGHT)

$f(t_3)$

$f_B(t_3)$

$f(t_2)$

$f_B(t_2)$

$f(t_1)$
$f(t_0)$

$f_B(t_1)$

$\Delta t$    $\Delta t$    $\Delta t$

$t_0$    $t_1$    $t_2$    $t_3$    TIME $t$

FIG.37

FIG.38

## FIG.39

$$I'(j_A) = I'(j_A-1) + \beta'_A$$
$$(\beta'_A = \beta \times \frac{\alpha}{\alpha_A'})$$

$$I(j_A) = I(j_A-1) + \beta$$

## FIG.40

**FIG.41**

EP 4 495 629 A1

## FIG.42

## FIG.43

<table>
<tr><td colspan="2" align="center">**INTERNATIONAL SEARCH REPORT**</td><td>International application No.<br><br>**PCT/JP2023/006754**</td></tr>
</table>

**A. CLASSIFICATION OF SUBJECT MATTER**

*G01S 17/34*(2020.01)i; *G01S 7/4912*(2020.01)i; *G01S 7/497*(2006.01)i; *G01C 3/06*(2006.01)n
FI: G01S17/34; G01S7/4912; G01S7/497; G01C3/06 120Q

According to International Patent Classification (IPC) or to both national classification and IPC

**B. FIELDS SEARCHED**

Minimum documentation searched (classification system followed by classification symbols)
G01S17/00-17/95; G01S7/48-7/51

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-125717 A (SEIKO EPSON CORP.) 20 July 2017 (2017-07-20)<br>    paragraphs [0020]-[0083] | 1-5, 8-10, 21 |
| A | | 6-7 |
| Y | JP 2020-85867 A (RICOH CO., LTD.) 04 June 2020 (2020-06-04)<br>    paragraphs [0010]-[0015], [0042]-[0047], fig. 1, 2, 10 | 11, 14-15 |
| A | | 12-13, 16-20 |
| Y | JP 2001-337160 A (HITACHI CABLE, LTD.) 07 December 2001 (2001-12-07)<br>    paragraphs [0042]-[0044] | 11, 14-15 |
| A | | 12-13 |
| Y | JP 2012-103203 A (DENSO CORP.) 31 May 2012 (2012-05-31)<br>    paragraphs [0072]-[0074] | 14-15 |
| A | JP 2017-181269 A (TOYOTA CENTRAL R&D LABS., INC.) 05 October 2017 (2017-10-05)<br>    entire text, all drawings | 16-20 |

☑ Further documents are listed in the continuation of Box C.      ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**17 April 2023** | Date of mailing of the international search report<br><br>**16 May 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

**INTERNATIONAL SEARCH REPORT**

International application No.

**PCT/JP2023/006754**

| C. | DOCUMENTS CONSIDERED TO BE RELEVANT | | |
|---|---|---|
| Category* | Citation of document, with indication, where appropriate, of the relevant passages | Relevant to claim No. |
| A | US 2018/0024232 A1 (CONTINENTAL ADVANCED LIDAR SOLUTIONS US, LLC.) 25 January 2018 (2018-01-25) <br> entire text, all drawings | 16-20 |

Form PCT/ISA/210 (second sheet) (January 2015)

EP 4 495 629 A1

## INTERNATIONAL SEARCH REPORT

International application No.

**PCT/JP2023/006754**

| Box No. III | Observations where unity of invention is lacking (Continuation of item 3 of first sheet) |
|---|---|

This International Searching Authority found multiple inventions in this international application, as follows:

A: The claims include three inventions.
The classification is indicated below.

B: Classification of inventions
(Invention 1) Claims 1-10 and 21
(Invention 2) Claims 11-15
(Invention 3) Claims 16-20

C: Remarks

For claim 1, refer to document 1 (JP 2017-125717 A (SEIKO EPSON CORP.)), paragraphs [0036], [0040], [0044], [0049], [0052], [0053], [0061], [0062], [0068], etc. In particular, the document, in paragraph [0068], indicates that "(...) Thus, in view of improving both the resolution and the response, it is preferable, by using one having a variable bandwidth as the bandpass filter 54, to widen the bandwidth of the bandpass filter 54 when the rate of change in the beat frequency fb is great, and to narrow the bandwidth of the bandpass filter 54 when the rate of change is small". This "rate of change in the beat frequency fb", as one example, corresponds to the "temporal change in the beat frequency" in claim 1. Thus the feature wherein ["the distance L is obtained on the basis of the beat frequency fb and the rate of change $d\lambda/dt$ in the timing when a beat signal appears in the output signal of the bandpass filter 54 (paragraph [0061], etc.)", obtained as a result of adjusting the "bandwidth of the bandpass filter 54"] and the feature recited in the fourth paragraph of claim 1 of "(...) obtaining the distance to the object on the basis of the temporal change in the beat frequency (...)" each use the "temporal change in the beat frequency" as a factor, resulting in distance measurement. Thus no difference is found in language therebetween.

That is to say, the invention of claim 1 is disclosed in document 1, and thus does not have a special technical feature.

Accordingly claim 1 and claims dependent therefrom and the like are classified as (invention 1). Meanwhile, correction by temperature recited in claims 8 and 9, correction to a light source recited in claim 21, and the like are so well known that it is not necessary to provide any example thereof.

The inventions of independent claims 11 and 16 are, obviously, not inventions in the same category that include all matters specifying the invention recited in claim 1. Furthermore, the same or corresponding special technical features are not found between the invention classified as (invention 1) and the other inventions.

Thus the other inventions are classified as (invention 2) and (invention 3).

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**
[ ] The additional search fees were accompanied by the applicant's protest and, where applicable, the payment of a protest fee.
[ ] The additional search fees were accompanied by the applicant's protest but the applicable protest fee was not paid within the time limit specified in the invitation.
[✓] No protest accompanied the payment of additional search fees.

Form PCT/ISA/210 (continuation of first sheet) (January 2015)

| | INTERNATIONAL SEARCH REPORT<br>Information on patent family members | | International application No.<br>**PCT/JP2023/006754** |
|---|---|---|---|

| Patent document<br>cited in search report | Publication date<br>(day/month/year) | Patent family member(s) | Publication date<br>(day/month/year) |
|---|---|---|---|
| JP 2017-125717 A | 20 July 2017 | (Family: none) | |
| JP 2020-85867 A | 04 June 2020 | (Family: none) | |
| JP 2001-337160 A | 07 December 2001 | (Family: none) | |
| JP 2012-103203 A | 31 May 2012 | US 2012/0119938 A1<br>paragraphs [0079]-[0081]<br>DE 102011086110 A1<br>CN 102540190 A | |
| JP 2017-181269 A | 05 October 2017 | (Family: none) | |
| US 2018/0024232 A1 | 25 January 2018 | JP 2014-167468 A<br>EP 2759848 A1 | |

Form PCT/ISA/210 (patent family annex) (January 2015)

67

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020502503 A
- JP 2022040509 A